(19) **Europäisches Patentamt / European Patent Office / Office européen des brevets**

(11) **EP 4 348 180 B1**

(12) # FASCICULE DE BREVET EUROPEEN

(45) Date de publication et mention
de la délivrance du brevet:
**05.11.2025 Bulletin 2025/45**

(21) Numéro de dépôt: **22735208.5**

(22) Date de dépôt: **03.06.2022**

(51) Classification Internationale des Brevets (IPC):
**G01C 21/16** *(2006.01)*

(52) Classification Coopérative des Brevets (CPC):
**G01C 21/165**

(86) Numéro de dépôt international:
**PCT/FR2022/051065**

(87) Numéro de publication internationale:
**WO 2022/254163 (08.12.2022 Gazette 2022/49)**

(54) **PROCEDE D'AIDE A LA NAVIGATION D'UN VEHICULE**

VERFAHREN ZUR UNTERSTÜTZUNG DER NAVIGATION EINES FAHRZEUGS

METHOD FOR ASSISTING WITH THE NAVIGATION OF A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.06.2021 FR 2105894**

(43) Date de publication de la demande:
**10.04.2024 Bulletin 2024/15**

(73) Titulaire: **SAFRAN**
**75015 Paris (FR)**

(72) Inventeur: **BARRAU, Axel**
**77550 MOISSY-CRAMAYEL (FR)**

(74) Mandataire: **Regimbeau**
**20, rue de Chazelles**
**75847 Paris Cedex 17 (FR)**

(56) Documents cités:
**WO-A1-2016/156602     US-A1- 2014 341 465
US-A1- 2017 314 928**

**Description**

**DOMAINE DE L'INVENTION**

La présente invention concerne le domaine des procédés de navigation d'un véhicule. Elle concerne plus particulièrement les procédés de navigation dits hybrides.

**ETAT DE LA TECHNIQUE**

Les procédés de navigation hybrides sont des procédés dans lesquels des mesures issues de plusieurs capteurs (accéléromètres, gyroscopes, GPS, etc.) sont fusionnées afin de déterminer des variables représentatives d'un état d'un dispositif mettant en œuvre le procédé.

Ces variables comprennent des variables cinématiques qui sont, par exemple, une position, une vitesse ou une matrice d'orientation du dispositif représentant le changement de coordonnées depuis un repère mobile attaché au porteur vers un repère de référence.

Ces variables comprennent aussi des variables de défaut de capteurs dont la valeur est représentative de défauts sur la mesure d'un ou plusieurs capteurs (par exemple un biais ou un mauvais positionnement du capteur).

Dans la suite on désigne par variables indistinctement les variables cinématiques et les variables de défaut de capteurs.

Ces procédés utilisent des mesures principales qui sont des mesures de mouvement, par exemple des mesures inertielles, comme celles obtenues d'accéléromètres et de gyroscopes. Les accéléromètres et les gyroscopes permettent d'obtenir la force spécifique et la vitesse angulaire. La force spécifique est la somme des forces extérieures autres que gravitationnelles divisée par la masse. Cette quantité a donc la dimension d'une accélération.

Ces procédés utilisent en plus des mesures additionnelles qui peuvent venir d'un autre capteur (GPS, odomètre, etc.) ou d'un algorithme permettant de détecter l'arrêt du dispositif. Dans ce dernier cas la vitesse du véhicule est détectée comme nulle par un algorithme, ou indiquée comme nulle par l'utilisateur, et non réellement mesurée mais cela n'affecte pas le fonctionnement du procédé de navigation et on parlera dans ce document de la détection d'arrêt comme d'une « mesure » de vitesse. Ces mesures additionnelles sont fusionnées avec les mesures principales pour déterminer les variables cinématiques.

Des procédés de navigation hybrides utilisent un filtrage de Kalman étendu classique. Ce filtrage est caractérisé par des étapes de propagation utilisant les mesures principales et par des étapes de mise à jour utilisant les mesures additionnelles. Le filtrage de Kalman étendu entretient des valeurs estimées des variables du système et une matrice $P_n$, dite de covariance, évaluant l'incertitude des valeurs estimées. Cette incertitude est définie comme la covariance d'une variable d'erreur $e^X$ définie comme $e^X = X - \hat{X}$ où $\hat{X}$ est l'estimation d'une des variables vectorielles et où $X$ est la valeur réelle de cette variable vectorielle. L'une des variables cinématiques étant en général une orientation représentée par une matrice de rotation (donc une variable non vectorielle), la formule ci-dessus ne peut pas être utilisée pour l'orientation qui n'est pas représentée par un vecteur mais en général par un quaternion unitaire ou une matrice d'orientation et une variable d'erreur de rotation $e^T$ est définie par la formule $R(e^T) = T\hat{T}^t$ ou $R(e) = \hat{T}^t T$, R(·) désignant la fonction retournant une matrice de rotation à partir d'un vecteur de rotation, $T$ désignant la matrice d'orientation, $\hat{T}$ la valeur estimée de cette matrice et le symbole $M^t$ désignant la transposition d'une matrice $M$.

Cependant le filtre de Kalman étendu classique n'est pas capable de corriger de grandes erreurs d'estimation et il réclame une phase préalable dite d'alignement.

On connait le filtre de Kalman invariant, dans lequel des variables d'erreur particulières sont utilisées pour obtenir de meilleures performances sur certains systèmes non linéaires (en particulier en navigation). Pour un vecteur $X$ écrit dans un repère donné et une matrice d'orientation $T$ représentant le changement de coordonnées depuis un repère mobile attaché au porteur vers le repère donné utilisé pour écrire le vecteur $X$. Ces variables d'erreur dites « invariantes » sont de deux types :

- Variables d'erreur invariantes à gauche dans ce repère donné:

$$R(e^T) = \hat{T}^t T, \qquad e^X = \hat{T}^t (X - \hat{X})$$

- Variables d'erreur invariantes à droite dans ce repère donné:

$$R(e^T) = T\hat{T}^t, \qquad e^X = X - T\hat{T}^t \hat{X}$$

Cependant les performances du filtre de Kalman invariant sont assurées par des propriétés théoriques uniquement lorsque toutes les variables qu'il estime sont définies dans le même repère. S'il estime simultanément des valeurs définies dans des repères différents comme un repère inertiel et un repère attaché au porteur il peut perdre de la consistance. On parle de perte de consistance lorsque les erreurs d'estimation réelles commises par le filtre sont significativement supérieures aux incertitudes définies par la matrice de covariance calculée par le filtre. C'est le cas lorsque certaines valeurs, comme la position ou la vitesse du dispositif, sont définies dans un repère de référence (par exemple un référentiel géocentrique) alors que d'autres valeurs, comme des défauts sur un ou plusieurs capteurs, sont définies dans un repère mobile (par exemple centré sur le dispositif). De plus, les variables d'erreur particulières utilisées par un filtre de Kalman invariant sont parfois sources d'instabilités numériques, au sens où les variables estimées s'éloignent progressivement de leur valeur attendue à cause des approximations faites par le calculateur lors des opérations arithmétiques sur des nombres flottants.

Il y a donc un besoin pour un nouveau type de procédé de navigation qui permette d'estimer l'état d'un système de façon consistante et numériquement stable, cet état comprenant des valeurs définies dans des repères différents.

Document US 2017314928 A1 propose une méthode d'estimation d'un état de navigation avec plusieurs variables d'une porteuse mobile selon la méthode du filtre de Kalman étendu.

## EXPOSE DE L'INVENTION

A ce titre, l'invention propose un procédé selon la revendication 1.

Ainsi, ce procédé permet de déterminer la valeur des variables du dispositif de navigation. Ces variables sont des variables cinématiques et des variables de défaut des capteurs. Ce procédé peut donc déterminer des variables qui ne sont pas toutes exprimées dans un même repère. En particulier les variables cinématiques sont exprimées dans un repère différent des variables de défaut des capteurs.

Dans un filtre de Kalman étendu on connait l'utilisation de points de linéarisations dits « système » qui permettent d'obtenir une approximation linéaire du système : à chaque pas de temps un point de linéarisation système est utilisé durant l'étape de détermination des valeurs courantes et un autre point de linéarisation système est utilisé durant l'étape de mise à jour.

Dans cette invention les points de linéarisation des variables d'erreur sont des points de linéarisation qui permettent de réaliser des changements de variables d'erreur. On les appellera simplement « points de linéarisation ».

Le changement de variable d'erreur utilisé dans l'invention est un transfert de toutes les variables dans un même repère suivi de l'usage d'une erreur invariante. Ce changement de variable d'erreur est immédiatement suivi d'un changement de variable d'erreur inverse, mais appliqué sur un point de linéarisation différent. Cette seconde opération n'annule pas la précédente car le point de linéarisation utilisé est différent. L'étape complète définie comme la succession de ces deux opérations n'existe pas dans l'art antérieur et améliore les performances du filtre en lui donnant certaines propriétés du filtrage invariant. Cette étape améliore particulièrement les performances du filtre dans le cas de biais importants sur les capteurs.

En outre l'utilisation de deux systèmes de variables d'erreur permet d'éviter certains problèmes numériques induits par le filtrage invariant qui apparaissent dans les applications de navigation de longue distance.

Dans un mode de réalisation les valeurs courantes et précédentes des variables sont définies dans un repère de référence, le premier changement de variable d'erreur est un changement vers des variables d'erreurs invariantes dans un repère auxiliaire connu par rapport au repère de référence, le deuxième changement de variable d'erreur est un changement depuis des variables d'erreurs invariantes dans le repère auxiliaire connu par rapport au repère de référence. Le repère auxiliaire peut être confondu ou pas avec le repère de référence.

Dans un mode de réalisation on détermine le premier point de linéarisation à partir des valeurs courantes avant la mise à jour, et on détermine le deuxième point de linéarisation à partir des valeurs courantes après la mise à jour.

Dans un mode de réalisation le premier point de linéarisation est un point de linéarisation système utilisé lors de l'étape de mise à jour et le deuxième point de linéarisation est un point de linéarisation système utilisé lors de l'étape de détermination des valeurs courantes de l'instant suivant.

Dans un mode de réalisation on détermine un produit d'une première matrice de transformation réalisant la première transformation et d'une deuxième matrice de transformation réalisant la deuxième transformation, et on réalise conjointement la première transformation et la deuxième transformation en utilisant le produit.

Dans un mode de réalisation, les variables comprennent :

- une orientation du dispositif de navigation,
- une vitesse du dispositif de navigation,
- une position du dispositif de navigation et
- un défaut sur un capteur du dispositif de navigation, dont une valeur courante est un vecteur ou une matrice de défaut courant,

le premier changement de variable d'erreur est un changement de variable d'erreur :

- d'une valeur courante de l'orientation,
- d'une valeur courante de la vitesse,
- d'une valeur courante de la position et
- du vecteur ou de la matrice de défaut courant,

vers des variables d'erreurs invariantes, dans un repère auxiliaire connu par rapport à un repère de référence.

Dans un mode de réalisation les variables comprennent :

- une orientation du dispositif de navigation, dont une valeur courante est une matrice d'orientation courante et dont une valeur précédente est une matrice d'orientation précédente,
- une vitesse du dispositif de navigation, dont une valeur courante est un vecteur vitesse courant et une valeur précédente est un vecteur vitesse précédent,
- une position du dispositif de navigation, dont une valeur courante est un vecteur position courant et une valeur précédente est un vecteur position précédent et
- un défaut sur un capteur du dispositif de navigation, dont une valeur courante est un vecteur de défauts courant et une valeur précédente est un vecteur de défauts précédent,

la matrice d'incertitude courante étant représentative d'une incertitude de la matrice d'orientation courante, du vecteur vitesse courant du vecteur position courant, et du vecteur de défaut de capteur courant,
la matrice d'incertitude précédente étant représentative d'une incertitude de la matrice d'orientation précédente, du vecteur vitesse précédent, du vecteur position précédent et du vecteur de défaut de capteur précédent.

Dans un mode de réalisation, les valeurs courantes sont associées à un instant courant et les valeurs précédentes sont associées un instant précédent, la détermination des valeurs courantes comprenant :

- une détermination du vecteur vitesse courant par ajout au vecteur vitesse précédent d'une intégration, sur un intervalle temporel compris entre l'instant précédent et l'instant courant, d'une somme d'une force spécifique du dispositif de navigation éventuellement corrigée à l'aide des valeurs estimées des défauts de capteurs et d'un modèle d'une gravité terrestre subie par le dispositif de navigation,
- une détermination du vecteur de position courant par ajout au vecteur de position précédent d'une intégration, sur l'intervalle temporel, du vecteur vitesse précédent,
- une détermination de la matrice d'orientation courante par multiplication de la matrice d'orientation précédente avec une matrice représentative d'une rotation du dispositif de navigation éventuellement corrigée à l'aide des valeurs estimées des défauts de capteurs, et/ou
- une détermination de la matrice d'incertitude courante à partir de la matrice d'incertitude précédente.

Ainsi dans ce mode de réalisation si le défaut de capteur est un vecteur de biais des accéléromètres, la force spécifique qui est utilisée pour calculer le vecteur vitesse courant est corrigée pour prendre en compte les valeurs estimées des défauts de capteurs.

De même si la matrice représentative d'une rotation du dispositif de navigation est corrigée pour prendre en compte les valeurs estimées des défauts de capteurs.

Dans un mode de réalisation, la mesure est une mesure effectuée dans un repère mobile attaché au dispositif de navigation de la vitesse du dispositif de navigation par rapport à un repère de référence, la détermination de la correction comprend :

- une soustraction à la mesure de la vitesse d'une multiplication de la transposée de la matrice d'orientation courante et du vecteur vitesse courant, et
- une multiplication de la soustraction par une matrice de gain.

Dans un mode de réalisation, la correction est un vecteur de correction, la mise à jour comprend:

- une sous-étape de mise à jour de la matrice d'orientation courante par multiplication de la matrice d'orientation courante et d'une matrice de rotation associée à un vecteur de rotation qui constitue une première partie du vecteur de correction,
- une sous-étape de mise à jour du vecteur de vitesse courant par ajout au vecteur de vitesse courant d'une multiplication de la matrice d'orientation courante et d'une deuxième partie du vecteur de correction, et/ou

- une sous-étape de mise à jour du vecteur de position courant par ajout au vecteur de position courant d'une multiplication de la matrice d'orientation par une troisième partie du vecteur de correction, et/ou
- une sous-étape de mise à jour du vecteur de défauts de capteurs courant par ajout au vecteur de défauts de capteurs courant d'une quatrième partie du vecteur de correction.

Dans un mode de réalisation, les valeurs courantes sont des premières valeurs courantes, les valeurs précédentes sont des premières valeurs précédentes, la correction est une première correction, la mesure est une première mesure, la matrice de gain est une première matrice de gain, la matrice d'incertitude est une première matrice d'incertitude, la matrice d'incertitude modifiée est une première matrice d'incertitude modifiée. Le procédé comprend en outre :

- une détermination de deuxièmes valeurs courantes des variables et d'une deuxième matrice d'incertitude courante représentative d'une incertitude des deuxièmes valeurs courantes, à partir de deuxièmes valeurs précédentes des variables et d'une deuxième matrice d'incertitude précédente représentative d'une incertitude des deuxièmes valeurs précédentes,
- une détermination d'une deuxième correction à partir :

  - des deuxièmes valeurs courantes,
  - de la deuxième matrice d'incertitude courante et
  - d'une deuxième mesure éventuellement identique à la première mesure,

- une mise à jour des deuxièmes valeurs courantes et de la deuxième matrice d'incertitude courante à partir de la deuxième correction et de la deuxième matrice d'incertitude courante,
- une première transformation de la deuxième matrice d'incertitude afin d'obtenir une deuxième matrice d'incertitude modifiée, la première transformation étant un premier changement de variable d'erreur selon un troisième point de linéarisation et
- une deuxième transformation de la deuxième matrice d'incertitude modifiée, la deuxième transformation étant un deuxième changement de variable d'erreur selon un quatrième point de linéarisation,

le troisième point de linéarisation étant différent du quatrième point de linéarisation.

Dans un mode de réalisation, le procédé comprend en outre une détermination de valeurs consolidées des variables, à partir des premières valeurs courantes et des deuxièmes valeurs courantes.

Dans un mode de réalisation, la détermination de valeurs consolidées respectives des variables comprend une détermination d'une similitude ou d'un écart entre les premières valeurs corrigées et les deuxièmes valeurs corrigées et, lorsque la similitude est supérieure à un seuil de similitude ou lorsque l'écart est inférieur à un seuil d'écart , la détermination de valeurs consolidées respectives des variables comprend également un moyennage des premières valeurs corrigées et des deuxièmes valeurs corrigées ou un moyennage pondéré des premières valeurs corrigées et des deuxièmes valeurs corrigées ou une sélection des premières valeurs corrigées ou des deuxièmes valeurs corrigées.

Dans un mode de réalisation, la détermination de valeurs consolidées respectives des variables cinématiques comprend une détermination d'un premier écart entre les premières valeurs corrigées et les premières mesures, une détermination d'un deuxième écart entre les deuxièmes valeurs corrigées et les deuxièmes mesures et une sélection des premières valeurs corrigées lorsque le premier écart est inférieur au deuxième écart ou des deuxièmes valeurs corrigées lorsque le premier écart est supérieur au deuxième écart.

En d'autres termes dans ce mode de réalisation, la détermination de valeurs consolidées respectives des variables comprend une détermination d'un indicateur d'écart aux mesures des premières valeurs et d'un indicateur d'écart aux mesures des deuxièmes valeurs. La détermination comprend une sélection des valeurs ayant l'indicateur d'écart aux mesures le plus bas.

Dans un mode de réalisation on détermine une valeur courante d'une variable représentant l'environnement du dispositif de navigation à partir d'une valeur précédente de la variable représentant l'environnement du dispositif de navigation.

Un autre aspect de l'invention concerne un dispositif de navigation comprenant une unité de traitement, trois accéléromètres, trois gyroscopes et un dispositif de mesure par exemple d'une vitesse du dispositif de navigation. L'unité de traitement est configurée pour la mise en œuvre du procédé d'aide à la navigation.

Un autre aspect de l'invention concerne un produit programme d'ordinateur comprenant des instructions de code de programme pour l'exécution des étapes du procédé d'aide à la navigation.

## DESCRIPTION DES FIGURES

D'autres caractéristiques et avantages de l'invention ressortiront encore de la description qui suit, laquelle est purement illustrative et non limitative et doit être lue en regard des figures annexées sur lesquelles :

- la figure 1 représente un dispositif de navigation de l'invention,
- la figure 2 représente un mode de réalisation du procédé de navigation de l'invention,
- la figure 3 représente un deuxième mode de réalisation du procédé de navigation de l'invention, et
- la figure 4 représente, d'une autre manière, le deuxième mode de réalisation du procédé de navigation de l'invention.

## DESCRIPTION DETAILLEE DE L'INVENTION

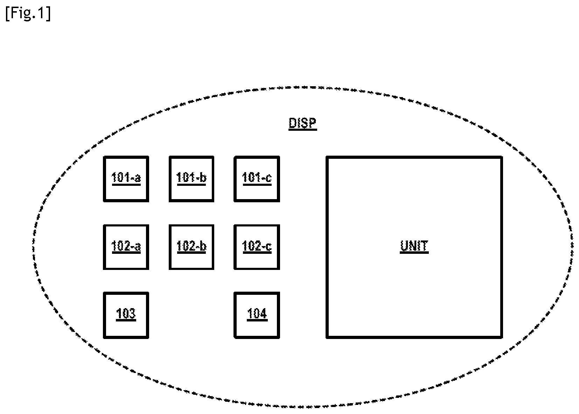

La figure 1 représente de manière schématique un dispositif de navigation DISP. Ce dispositif de navigation DISP comprend une unité de traitement UNIT. Cette unité de traitement UNIT comprend un processeur ou un microcontrôleur à usage général ou spécifique et une mémoire.

Le processeur ou le microcontrôleur peut être un circuit intégré spécifique à une application (*Application-Specific Integrated Circuit* pour ASIC en anglais), il peut aussi être un circuit logique programmable ou réseau logique programmable (*Field-Programmable Gate Array* pour FPGA en anglais).

La mémoire peut être fixe ou amovible et comporter différentes unités mémoire pouvant inclure une combinaison d'unités permettant un stockage volatile et non volatile. La mémoire est configurée pour stocker un code logiciel utilisable par le processeur ou le microcontrôleur, afin de réaliser un procédé de détermination de valeurs respectives de variables cinématiques du dispositif de navigation DISP.

Les valeurs des variables cinématiques permettent la localisation du dispositif de navigation DISP et donc la navigation du porteur de ce dispositif.

Le dispositif de navigation DISP comprend également

- trois accéléromètres 101-a à 101-c et
- trois gyroscopes 102-a à 102-c.

De plus le dispositif de navigation DISP peut éventuellement comprendre un dispositif de mesure 103 d'une position du dispositif de navigation DISP.

Le dispositif de navigation DISP peut aussi comporter d'autres dispositifs de mesures d'une variable cinématique ou d'une combinaison de plusieurs variables cinématiques ou de variables supplémentaires estimées également par le filtre de Kalman du dispositif de navigation DISP.

De plus, le dispositif de navigation DISP peut aussi comporter un dispositif de mesure 104 d'une distance parcourue par le porteur du dispositif de navigation DISP. Ce dispositif de mesure 104 est par exemple un odomètre 104.

Les trois accéléromètres 101-a à 101-c sont aptes à délivrer des données de force spécifique. Les trois accéléromètres sont associés respectivement à trois axes qui peuvent être orthogonaux entre eux.

Les trois gyroscopes 102-a à 102-c sont aptes à délivrer des données de vitesse angulaire. Les trois gyroscopes sont associés respectivement à trois axes qui peuvent être orthogonaux entre eux.

Les défauts des capteurs peuvent être par exemple des biais constants ou proportionnels à un signal électrique connu envoyé aux capteurs inertiels. Dans le cas de biais proportionnels à un signal électrique il est avantageux d'envoyer le même signal aux trois accéléromètres et/ou aux trois gyroscopes.

Plus précisément, les accéléromètres mesurent une force spécifique $f_n$ du dispositif de navigation DISP et les gyroscopes mesurent une vitesse angulaire du dispositif de navigation DISP. Cette vitesse angulaire est ensuite transformée en une matrice de rotation $\Omega_n$ représentative de la rotation du dispositif. L'intervalle de temps entre deux mesures est noté *dt*.

Dans un mode de réalisation la force spécifique $f_n$ est corrigée/modifiée à l'aide des valeurs estimées des défauts de capteurs.

Dans un mode de réalisation la matrice de rotation $\Omega_n$ représentative de la rotation du dispositif est corrigée/-modifiée à l'aide des valeurs estimées des défauts de capteurs.

Les accéléromètres et gyroscopes peuvent fournir, soit des forces spécifiques et des vitesses angulaires, soit directement des variations de vitesse et d'angle.

Le dispositif de mesure 103 d'une position du dispositif de navigation DISP est par exemple :

- un récepteur de navigation satellitaire, comme un récepteur de type GPS pour *Global Positionning System* en anglais ou un récepteur de type Galiléo,
- un dispositif réalisant une triangulation en utilisant des amers dont la position est connue ou

- un dispositif de télédétection par laser (*Light Detection And Ranging* pour LIDAR en anglais) d'un ensemble d'amers connus permettant de calculer la position du véhicule.

Dans le cas où le dispositif de mesure 103 d'une position n'est pas colocalisé avec le dispositif de navigation DISP, la distance entre le dispositif de mesure 103 et le dispositif de navigation DISP est considérée comme un défaut du capteur. Ce défaut du capteur peut être connu ou estimé au moment de la mise en œuvre du procédé de l'invention.

Les données délivrées par les trois accéléromètres 101-a à 101-c, par les trois gyroscopes 102-a à 102-c, et éventuellement par le dispositif de mesure 103 d'une position et par l'odomètre 104 sont reçues par l'unité de traitement UNIT.

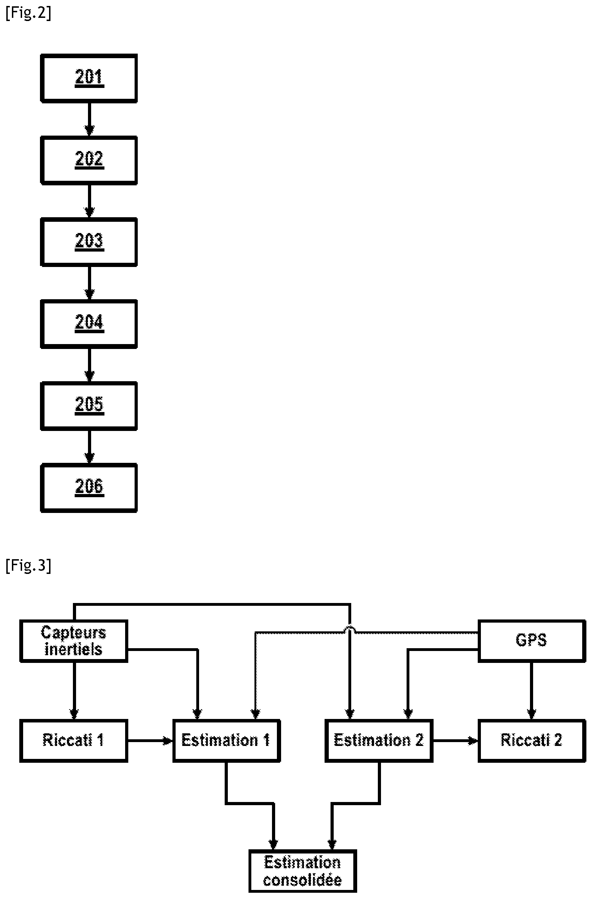

L'unité de traitement UNIT est configurée par la mise en œuvre du procédé de navigation via la détermination de valeurs respectives de variables du dispositif de navigation DISP. Ce procédé est représenté en figure 2. Il permet la localisation du dispositif de navigation DISP et donc la navigation du porteur de ce dispositif.

Ces variables comprennent des variables cinématiques qui sont, par exemple, une position, une vitesse ou une matrice d'orientation du dispositif représentant le changement de coordonnées depuis un repère mobile attaché au porteur vers un repère de référence.

Ces variables comprennent aussi des variables de défaut de capteurs dont la valeur est représentative de défauts sur la mesure d'un ou plusieurs capteurs (par exemple un biais de l'accéléromètre ou du gyroscope).

Dans l'ensemble du document on considère que :

- Le repère mobile est attaché au porteur, ainsi la connaissance de ce repère implique de connaître l'orientation du porteur.
- Le repère de référence, considéré comme fixe, est celui dans lequel on souhaite connaître les coordonnées du porteur. Il s'agit en général d'un repère terrestre, inertiel ou géographique.
- Le repère auxiliaire est celui utilisé pour écrire les variables d'erreur invariantes au moment de la mise à jour. Ce repère est connu par rapport au repère de référence et peut être déplacé régulièrement pour le rapprocher de la position estimée du porteur.

Le procédé de la figure 2 comprend les étapes suivantes :

- acquisition 201 de valeurs à priori de variables cinématiques du dispositif de navigation et de valeurs à priori de variables de défaut sur l'un des capteurs du dispositif de navigation DISP (cette dernière valeur a priori valant avantageusement zéro),
- détermination 202 de valeurs courantes respectives des variables cinématiques du dispositif de navigation DISP, de valeurs courantes respectives des variables de défaut de capteur et d'une matrice d'incertitude courante représentative d'une incertitude des valeurs courantes respectives des variables cinématiques et des variables de défauts de capteurs, à partir de valeurs précédentes respectives des variables cinématiques, de valeurs précédentes respectives des variables de défaut de capteur et d'une matrice d'incertitude précédente représentative d'une incertitude des valeurs précédentes respectives des variables cinématiques et des variables de défaut de capteurs,
- détermination 203 d'une correction à partir :

  - des valeurs courantes respectives des variables cinématiques et
  - d'une mesure, par exemple d'une mesure d'une des variables cinématiques ou d'une des variables de défaut de capteur,
  - d'une matrice d'incertitude et
  - d'une matrice de gain, la matrice de gain étant déterminée à partir de la matrice d'incertitude,

- mise à jour 204 des valeurs courantes respectives des variables cinématiques, des variables de défauts de capteurs et de la matrice d'incertitude courante à partir de la correction,
- une première transformation 205 de la matrice d'incertitude mise à jour. Cette première transformation 205 est un premier changement de variable d'erreur appliqué à la matrice d'incertitude mise à jour. Ce premier changement de variable d'erreur permet de passer d'un premier système de variables d'erreur définies pour les variables cinématiques dans un repère de référence (par exemple un référentiel géocentrique géographique, inertiel ou héliocentrique) et pour les variables de défauts de capteurs dans un repère mobile attaché au porteur, à un deuxième système de variables d'erreur, définies comme les variables d'erreur invariantes dans un unique repère auxiliaire utilisé à la fois pour les variables cinématiques et les défauts de capteurs. Ce repère auxiliaire peut être déplacé au cours du temps (par exemple replacé régulièrement sur la position estimée du porteur).

Les variables d'erreur désignent la représentation des erreurs d'estimation des variables d'état du dispositif DISP.

A la suite du premier changement de variable d'erreur, les variables de la matrice d'incertitude sont des variables d'erreur invariantes (au sens donné dans la section état de la technique) dans le repère auxiliaire.

Il existe deux types de variables d'erreur invariantes, définies dans la section état de la technique comme invariantes à gauche et invariantes à droite. On choisira les variables d'erreurs invariantes à gauche si les mesures sont effectuées dans un repère de référence fixe et invariantes à droite si les mesures sont effectuées dans un repère mobile attaché au porteur.

Le procédé de la figure 2 comprend enfin une deuxième transformation 206 de la matrice d'incertitude ayant subi la première transformation 205. Cette deuxième transformation 206 correspond à un deuxième changement de variable d'erreur, appliqué à la matrice d'incertitude ayant subi la première transformation 205. Ce deuxième changement de variable d'erreur permet de repasser du deuxième système de variables d'erreur au premier système de variables d'erreur.

Dans un filtre de Kalman étendu on connait l'utilisation de points de linéarisations dits système qui permettent d'obtenir une approximation linéaire du système : à chaque pas de temps un point de linéarisation est utilisé pour calculer la matrice F de l'étape de calcul de la valeur courante de la matrice de covariance et un autre point de linéarisation est utilisé pour calculer la matrice H de l'étape de mise à jour.

Le premier point de linéarisation des variables d'erreur de l'invention doit coïncider avec le point de linéarisation du système utilisé pour les calculs de l'étape de mise à jour tandis que le deuxième point de linéarisation des variables d'erreur de l'invention doit coïncider avec le point de linéarisation du système utilisé lors de l'étape de calcul de la matrice d'incertitude courante de l'instant suivant.

Dans un mode de réalisation on détermine le premier point de linéarisation à partir des valeurs courantes avant la mise à jour, et on détermine le deuxième point de linéarisation à partir des valeurs courantes après la mise à jour.

Ainsi dans ce mode de réalisation le premier point de linéarisation et le deuxième point de linéarisation sont différents.

Le changement de variable d'erreur d'une matrice de covariance $P^l$ représentant l'incertitude d'une variable d'erreur $e^l$ est un procédé permettant d'obtenir, à l'aide d'un développement de Taylor au premier ordre d'une deuxième variable d'erreur $e^c$ par rapport à la variable d'erreur $e^l$, une deuxième matrice de covariance représentant l'incertitude de la deuxième variable d'erreur $e^c$. Il permet, par exemple, de changer le repère de la première incertitude de la variable. Ainsi, dans le cas où la variable est une position dans un plan, une première incertitude de cette variable de position s'exprime en coordonnées polaires ayant la forme $\begin{pmatrix} e_r \\ e_\theta \end{pmatrix}$ et contient une incertitude $e_r$ de la distance à l'origine r et une incertitude $e_\theta$ de l'angle $\theta$. On peut écrire la même incertitude à l'aide de coordonnées cartésiennes $\begin{pmatrix} e_x \\ e_y \end{pmatrix}$ en utilisant la formule de changement de variable d'erreur :

$$\begin{pmatrix} e_x \\ e_y \end{pmatrix} = L_{r,\theta} \begin{pmatrix} e_r \\ e_\theta \end{pmatrix}$$

Avec $L_{r,\theta} = \begin{pmatrix} \cos(\theta) & -r.sin(\theta) \\ \sin(\theta) & r.\cos(\theta) \end{pmatrix}$ où $(r,\theta)$ sont les coordonnées polaires du point par rapport auquel l'incertitude est considérée. Ce point est aussi appelé le point de linéarisation du changement de variable d'erreur. $L_{r,\theta}$ est donc une matrice de changement de variable d'erreur, qui permet de transformer la matrice de covariance $P^l$ des incertitudes définies en coordonnées polaires en une matrice de covariance $P^c$ dans laquelle les incertitudes sont définies en coordonnées cartésiennes par la formule suivante :

$$P^c = L_{r,\theta} P^l L_{r,\theta}^t$$

On voit que la nouvelle matrice d'incertitude dépend de l'ancienne, mais aussi des coordonnées $(r,\theta)$ d'un point de linéarisation.

Un changement de variable d'erreur est donc une opération qui prend une matrice de covariance, un premier système de variables d'erreur, un deuxième système de variables d'erreur et un point de linéarisation et qui retourne une nouvelle matrice de covariance. Un point de linéarisation différent conduit à une matrice retournée différente.

Ainsi, comme le point de linéarisation du premier changement de variable d'erreur et le point de linéarisation du deuxième changement de variable d'erreur sont différents, le deuxième changement de variable d'erreur n'annule pas le premier changement de variable d'erreur.

Le premier changement de variable d'erreur peut être réalisé par une première matrice et le deuxième changement de variable d'erreur peut être réalisé par une deuxième matrice.

La première matrice et la deuxième matrice peuvent être déterminées à l'avance de façon analytique, ainsi que le produit de ces deux matrices. Ensuite ces deux matrices ou le produit des deux matrices peuvent être utilisés pour réaliser le premier changement de variable d'erreur et le deuxième changement de variable d'erreur.

Par repère mobile attaché au porteur, on comprend le repère aligné et centré sur le dispositif DISP. Par repère auxiliaire on entend un repère entièrement connu utilisé pour les calculs, qui peut être fixe ou déplacé régulièrement à proximité de la position estimée du porteur, afin d'éviter des problèmes numériques. On peut aussi lui attribuer une vitesse proche de la vitesse estimée du porteur.

La correction est déterminée par une matrice de transformation ou matrice de gain (notée $K$ par la suite). Cette matrice de gain $K$ est calculée à partir d'une matrice d'observation (notée $H$ par la suite). La matrice d'observation $H$ dans l'état de la technique relie au premier ordre une erreur d'estimation de l'état du système à une erreur de prédiction de la mesure. La matrice de gain $K$ utilise la matrice d'observation $H$ pour effectuer l'opération inverse : déterminer une correction de l'état à partir d'une erreur de prédiction de la mesure constatée.

Dans un filtre de Kalman (linéaire, étendu ou invariant) on définit une observation comme une fonction de l'état prédisant la mesure d'un capteur, par exemple un récepteur GPS fournissant une observation de position ou un odomètre fournissant une observation de vitesse dans le repère du porteur.

Les variables cinématiques du dispositif comprennent :

- une orientation du dispositif, dont la valeur est une matrice $T$ d'orientation courante ou précédente, de taille 3 par 3, cette orientation peut aussi être représentée par un quaternion,
- une vitesse du dispositif, dont la valeur est un vecteur V de vitesse courant ou précédent, de taille 3, et
- une position du dispositif, dont la valeur est un vecteur $X$ de position courant ou précédent, de taille 3.
- des variables de défaut de capteur dont trois apparaîtront dans les équations ci-dessous : les biais des mesures des accéléromètres, les biais des mesures des gyroscopes et des facteurs conduisant à des biais de gyroscopes une fois multipliés par des signaux électriques connus.

De plus, on utilise une matrice d'incertitude P représentative d'une incertitude des variables cinématiques et des variables de défauts de capteurs. Cette matrice est une matrice de covariance.

Dans la suite du document, les variables (matrices ou vecteurs) portant un accent circonflexe représentent des variables estimées, les variables réelles correspondantes sont notées sans accent circonflexe.

Le procédé comprend la détermination de la valeur de ces variables, qui sont notées respectivement $\hat{T}_{n|n}$, $\hat{V}_{n|n}$ et $\hat{X}_{n|n}$ pour les variables cinématiques et $\hat{d}_{n|n}$, $\hat{d}^u_{n|n}$, $\hat{b}_{n|n}$ pour les variables de défauts de capteurs. Le procédé comprend aussi la détermination de la matrice de covariance $P_{n|n}$ représentative de l'incertitude de l'estimation actuelle. On suppose aussi qu'une matrice de covariance $P_{0|0}$, représentant l'incertitude initiale, est disponible au début de la navigation.

L'indice n représente ici le pas de temps et, de manière classique dans un filtrage de Kalman, l'indice $n|n$ représente l'estimation de la valeur à l'instant n en tenant compte de l'observation effectuée à l'instant n et l'indice $n|n-1$ représente l'estimation de la valeur à l'instant $n$ sans tenir compte de l'observation effectuée à l'instant $n$.

Dans l'invention le premier système de variables d'erreur est quelconque, mais pour aboutir à la mise en œuvre qui suit le premier système de variables suivant a été choisi :

$$e^T = \hat{T}^t T$$

$$e^V = \hat{T}^t \left( V - \hat{V} \right)$$

$$e^X = \hat{T}^t \left( X - \hat{X} \right)$$

$$e^d = d - \hat{d}$$

$$e^{d^u} = d^u - \hat{d}^u$$

$$e^b = b - \hat{b}$$

On voit que les variables d'erreur $e^b$, $e^d$, $e^{du}$ ne sont pas des variables d'erreur invariantes.

La détermination 202 utilise les équations suivantes :

$$\hat{V}_{n|n-1} = \hat{V}_{n-1|n-1} + dt.\left(\hat{T}_{n-1|n-1}\left(f_n - \hat{b}_{n|n-1}\right) + g_n\right)$$

$$\hat{X}_{n|n-1} = \hat{X}_{n-1|n-1} + dt.\hat{V}_{n-1|n-1}$$

$$\hat{T}_{n|n-1} = \hat{T}_{n-1|n-1}\,\mathrm{R}\left(dt\left(\omega_n - \hat{d}_{n|n-1} - U_n\hat{d}^u_{n|n-1}\right)\right)$$

$$\hat{d}_{n|n-1} = \hat{d}_{n-1|n-1}$$

$$\hat{d}^u_{n|n-1} = \hat{d}^u_{n-1|n-1}$$

$$\hat{b}_{n|n-1} = \hat{b}_{n-1|n-1}$$

$$P_{n|n-1} = F_n P_{n-1|n-1} F_n^t + Q_n$$

Avec :

- $\hat{V}_{n|n-1}$ est le vecteur vitesse courant,
- $\hat{V}_{n-1|n-1}$ est le vecteur vitesse précédent,
- $\hat{X}_{n|n-1}$ est le vecteur position courant,
- $\hat{X}_{n-1|n-1}$ est le vecteur position précédent,
- $\hat{T}_{n|n-1}$ est la matrice d'orientation courante, ainsi la matrice d'orientation courante est calculée à partir des vitesses angulaires mesurées par les gyroscopes modifiées à l'aide des variables de défauts de capteurs estimées,
- $\hat{T}_{n-1|n-1}$ est la matrice d'orientation précédente,
- $\hat{b}_{n-1|n-1}$ représente un vecteur de trois biais précédents sur les mesures des trois accéléromètres,
- $\hat{b}_{n|n-1}$ représente un vecteur de trois biais courants sur les mesures des trois accéléromètres,
- $\hat{d}_{n-1|n-1}$ représente un vecteur de trois biais précédant sur les mesures des gyroscopes,
- $\hat{d}_{n|n-1}$ représente un vecteur de trois biais courant sur les mesures des trois gyroscopes, ainsi dans ce mode de réalisation le vecteur de trois biais courant est obtenu par recopie du vecteur de trois biais précédant.
- $\hat{d}^u_{n-1|n-1}$ représente un vecteur contenant trois facteurs précédents dont les produits avec trois signaux électriques connus $u^1_{n-1}, u^2_{n-1}, u^3_{n-1}$ forment trois biais supplémentaires sur les mesures des trois gyroscopes.,
- $\hat{d}^u_{n|n-1}$ représente un vecteur contenant trois facteurs courants dont les produits avec trois signaux électriques connus $u^1_n, u^2_n, u^3_n$ forment trois biais supplémentaires sur les mesures des trois gyroscopes,
- $g_n$ est un modèle de la gravité subie par le dispositif de navigation DISP,
- $f_n$ est la force spécifique issue des accéléromètres,
- $dt$ est l'intervalle de temps entre les instants $n$ - 1 et $n$,
- $\omega_n$ est la mesure de vitesse angulaire fournie par le gyroscope,
- $U_n = \begin{pmatrix} u^1_n & 0 & 0 \\ 0 & u^2_n & 0 \\ 0 & 0 & u^3_n \end{pmatrix}$ est une matrice $3 \times 3$ contenant sur sa diagonale les trois signaux électriques connus $u^1_n, u^2_n, u^3_n$ proportionnels à des composantes de défauts des capteurs,
- $\Omega_n = \mathrm{R}\left(dt\left(\omega_n - \hat{d}_{n|n-1} - U_n\hat{d}^u_{n|n-1}\right)\right)$ est la rotation calculée entre l'orientation à l'instant précédent et l'orientation à l'instant actuel,
- $\mathrm{R}(\cdot)$ désigne la fonction retournant une matrice de rotation à partir d'un vecteur de rotation,

$$- F_n = \begin{pmatrix} \Omega_n^t & 0_3 & 0_3 & -D_R(\hat{\omega}_n) & -D_R(\hat{\omega}_n)U_n & 0_3 \\ -dt.\,\Omega_n^t(\hat{f}_n)_\times & \Omega_n^t & 0_3 & 0_3 & 0_3 & -dt.\,\Omega_n^t \\ 0_3 & dt.\,\Omega_n^t & \Omega_n^t & 0_3 & 0_3 & 0_3 \\ 0_3 & 0_3 & 0_3 & I_3 & 0_3 & 0_3 \\ 0_3 & 0_3 & 0_3 & 0_3 & I_3 & 0_3 \\ 0_3 & 0_3 & 0_3 & 0_3 & 0_3 & I_3 \end{pmatrix}$$

Où $\hat{\omega}_n = \omega_n - \hat{d}_{n|n-1} - U_n\hat{d}_{n|n-1}^u$ est la vitesse angulaire corrigée des dérives estimées, $\hat{f}_n = f_n - \hat{b}_{n|n-1}$ est la force spécifique corrigée des biais estimés et $D_R(\hat{\omega}_n)$ est définie par le développement de Taylor suivant en $\mu$ : $R(\hat{\omega}_n + \mu)$ = R($\hat{\omega}_n$)R($D_R(\hat{\omega}_n)\mu$) +∘ (||$\mu$||),

- $Q_n$ est une matrice de covariance représentant l'incertitude ajoutée par chaque étape de propagation des variables cinématiques et des variables d'erreurs capteurs. Les sources principales de cette incertitude sont l'imprécision des mesures issues des accéléromètres et des gyroscopes et l'évolution incertaine des vecteurs de biais modélisés. La valeur exacte à donner à $Q_n$ est déterminée en utilisant des spécifications fournies par le constructeur du dispositif de navigation DISP,

- $(l)_\times$ correspond à une matrice antisymétrique réalisée avec les composantes du vecteur $l$, cette matrice est telle que pour tout vecteur $v$ on ait $(l)_\times v = l \times v$ où $\times$ est un produit vectoriel,

- P est une matrice de covariance dont les valeurs de la diagonale représentent les incertitudes de chaque variable de l'état et dont les valeurs qui ne sont pas sur la diagonale représentent les incertitudes croisées entre les variables. $P_{n-1|n-1}$ est la matrice d'incertitude précédente, $P_{n|n-1}$ est la matrice d'incertitude courante.

Dans un mode de réalisation, l'étape 203 de détermination d'une correction $ds$ se déclenche lors de la détection d'un arrêt du dispositif DISP, et suit les équations suivantes :

$$z_n = 0 - \hat{T}_{n|n-1}^t \hat{V}_{n|n-1}$$

$$K_n = P_{n|n-1}H_n^t\left(H_n P_{n|n-1}H_n^t + R_n\right)^{-1}$$

$$ds = K_n z_n$$

Avec :

- $ds$ la correction.
- $R_n$ une matrice de covariance utilisée pour représenter les erreurs de mesure et les grandeurs non modélisées. Elle peut dépendre ou pas des variables cinématiques estimées,

- $H_n = \left(\left(\hat{T}_{n|n-1}^t \hat{V}_{n|n-1}\right)_\times \quad I_3 \quad O_{3,12}\right)$ la matrice d'observation qui permet de relier les variations de vitesse en repère porteur aux variables d'erreur du dispositif de navigation DISP,

- $K_n$ est une matrice de gain transformant l'erreur sur le vecteur vitesse en une correction à apporter sur les autres variables cinématiques et

- $O_{3,12}$ est une matrice nulle de taille $3 \times 12$.

Le zéro apparaissant à droite du signe « = » dans la définition de $z_n$ est l'observation de vitesse, qui vaut ici toujours zéro, car la mesure additionnelle est une détection d'arrêt.

$ds$ est un vecteur de taille 18. Les trois premières composantes ($ds_{1:3}$) correspondent à l'erreur en rotation. Les trois composantes suivantes ($ds_{4:6}$) correspondent à l'erreur en vitesse. Les trois composantes suivantes ($ds_{7:9}$) correspondent à l'erreur en position, les trois composantes suivantes $ds_{10:12}$ correspondent aux erreurs de biais des gyroscopes, les trois composantes suivantes $ds_{13:15}$ correspondent aux erreurs de facteurs à appliquer aux signaux électriques $u_n^1, u_n^2, u_n^3$ pour calculer trois biais supplémentaire à appliquer aux trois gyroscopes, les trois composantes suivantes $ds_{16:18}$ correspondent aux erreurs de biais des accéléromètres.

La détermination 203 d'une correction permet de déterminer l'erreur d'estimation de l'ensemble des variables cinématiques et des variables de défauts de capteurs du dispositif de navigation à partir de la mesure, qui est dans le cas particulier que nous décrivons ici une mesure de vitesse du dispositif.

Cette détermination de l'écart est réalisée par la matrice de gain $K_n$, qui prend en compte les incertitudes sur les variables cinématiques du dispositif de navigation DISP. S'il y a une incertitude faible, on tient compte de manière faible de la mesure de vitesse nulle et, s'il y a une incertitude importante, on tient compte de manière importante de la mesure de vitesse nulle.

La mise à jour 204 utilise la correction ds pour réaliser les équations suivantes :

$$\hat{T}_{n|n} = \hat{T}_{n|n-1} R(ds_{1:3})$$

$$\hat{V}_{n|n} = \hat{V}_{n|n-1} + \hat{T}_{n|n-1} ds_{4:6}$$

$$\hat{X}_{n|n} = \hat{X}_{n|n-1} + \hat{T}_{n|n-1} ds_{7:9}$$

$$\hat{d}_{n|n} = \hat{d}_{n|n-1} + ds_{10:12}$$

$$\hat{d}^u_{n|n} = \hat{d}^u_{n|n-1} + ds_{13:15}$$

$$\hat{b}_{n|n} = \hat{b}_{n|n-1} + ds_{16:18}$$

$$P_{n|n} = \left(I - K_n\ H_n\ \right) P_{n|n-1}$$

Dans un autre mode de réalisation, la mise à jour utilise la correction ds pour réaliser les équations modifiées suivantes :

$$\hat{T}_{n|n} = \hat{T}_{n|n-1} R(ds_{1:3})$$

$$\hat{V}_{n|n} = \hat{V}_{n|n-1} + R(ds_{1:3})V(ds_{1:3})ds_{4:6}$$

$$\hat{X}_{n|n} = \hat{X}_{n|n-1} + R(ds_{1:3})V(ds_{1:3})ds_{7:9}$$

$$\hat{d}_{n|n} = R(ds_{1:3})^t[I_3 + V(ds_{1:3})(ds_{1:3})_\times]\hat{d}_{n|n-1} + R(ds_{1:3})^t V(ds_{1:3})ds_{10:12}$$

$$\hat{d}^u_{n|n} = R(ds_{1:3})^t[I_3 + V(ds_{1:3})(ds_{1:3})_\times]\hat{d}^u_{n|n-1} + R(ds_{1:3})^t V(ds_{1:3})ds_{13:15}$$

$$\hat{b}_{n|n} = R(ds_{1:3})^t[I_3 + V(ds_{1:3})(ds_{1:3})_\times]\hat{b}_{n|n-1} + R(ds_{1:3})^t V(ds_{1:3})ds_{16:18}$$

$$P_{n|n} = (I - K_n H_n)P_{n|n-1}$$

$$\text{Avec } V(\alpha) = I_3 + \frac{(1-\cos(\|\alpha\|))}{\|\alpha\|^2}\ (\alpha)_\times + \frac{(\|\alpha\| - \sin(\|\alpha\|))}{\|\alpha\|^3}\ (\alpha)_\times{}^2.$$

Le premier changement de variable d'erreur, utilisant l'état avant mise à jour comme point de linéarisation, et le repère de référence comme repère auxiliaire, s'écrit :

$$P_{n|n}^{+} = L_{n|n-1} P_{n|n} L_{n|n-1}^{t}$$

Avec

$$L_{n|n-1} = \begin{pmatrix} \hat{T}_{n|n-1} & 0_3 & 0_3 & 0_3 & 0_3 & 0_3 \\ (\hat{V}_{n|n-1})_\times \hat{T}_{n|n-1} & \hat{T}_{n|n-1} & 0_3 & 0_3 & 0_3 & 0_3 \\ (\hat{X}_{n|n-1})_\times \hat{T}_{n|n-1} & 0_3 & \hat{T}_{n|n-1} & 0_3 & 0_3 & 0_3 \\ 0_3 & 0_3 & 0_3 & \hat{T}_{n|n-1} & 0_3 & 0_3 \\ 0_3 & 0_3 & 0_3 & 0_3 & \hat{T}_{n|n-1} & 0_3 \\ 0_3 & 0_3 & 0_3 & 0_3 & 0_3 & \hat{T}_{n|n-1} \end{pmatrix}$$

$L_{n|n-1}$ est une matrice de transformation permettant de réaliser le premier changement de variable d'erreur.

Le deuxième changement de variable d'erreur, prenant l'état après mise à jour comme point de linéarisation, s'écrit :

$$P_{n|n}^{++} = L_{n|n}^{-1} P_{n|n}^{+} (L_{n|n}^{-1})^{t}$$

Avec

$$L_{n|n} = \begin{pmatrix} \hat{T}_{n|n} & 0_3 & 0_3 & 0_3 & 0_3 & 0_3 \\ (\hat{V}_{n|n})_\times \hat{T}_{n|n} & \hat{T}_{n|n} & 0_3 & 0_3 & 0_3 & 0_3 \\ (\hat{X}_{n|n})_\times \hat{T}_{n|n} & 0_3 & \hat{T}_{n|n} & 0_3 & 0_3 & 0_3 \\ 0_3 & 0_3 & 0_3 & \hat{T}_{n|n} & 0_3 & 0_3 \\ 0_3 & 0_3 & 0_3 & 0_3 & \hat{T}_{n|n} & 0_3 \\ 0_3 & 0_3 & 0_3 & 0_3 & 0_3 & \hat{T}_{n|n} \end{pmatrix}$$

$L_{n|n}$ est une matrice de transformation permettant de réaliser le deuxième changement de variable d'erreur.

Comme indiqué dans l'un des modes de réalisation, on peut également calculer $L_n^{tot} = L_{n|n}^{-1} L_{n|n-1}$ et appliquer les deux changements de variable d'erreur en une seule opération :

$$P_{n|n}^{++} = L_n^{tot} P_{n|n} (L_n^{tot})^{t}$$

La matrice $L_n^{tot}$ est une matrice de changement de repère permettant de réaliser conjointement premier changement de variable d'erreur et le deuxième changement de variable d'erreur. Cette matrice $L_n^{tot}$ est ici particulièrement simple :

$$L_n^{tot}$$
$$= \begin{pmatrix} R(ds_{1:3})^T & 0_{3,3} & 0_{3,3} & 0_{3,3} & 0_{3,3} & 0_{3,3} \\ -R(ds_{1:3})^T (s_{4:6})_\times & R(ds_{1:3})^T & 0_{3,3} & 0_{3,3} & 0_{3,3} & 0_{3,3} \\ -R(ds_{1:3})^T (s_{7:9})_\times & 0_{3,3} & R(ds_{1:3})^T & 0_{3,3} & 0_{3,3} & 0_{3,3} \\ 0_{3,3} & 0_{3,3} & 0_{3,3} & R(ds_{1:3})^T & 0_{3,3} & 0_{3,3} \\ 0_{3,3} & 0_{3,3} & 0_{3,3} & 0_{3,3} & R(ds_{1:3})^T & 0_{3,3} \\ 0_{3,3} & 0_{3,3} & 0_{3,3} & 0_{3,3} & 0_{3,3} & R(ds_{1:3})^T \end{pmatrix}$$

Les étapes 202 à 206 du procédé sont répétées tout au long de la navigation.

En particulier le vecteur vitesse corrigé $\hat{V}_{n|n}$ devient le prochain vecteur vitesse précédent, le vecteur position corrigé $\hat{X}_{n|n}$ devient le prochain vecteur position précédent, la matrice d'orientation corrigée $\hat{T}_{n|n}$ devient la prochaine matrice d'orientation précédente et les états de défauts de capteurs corrigés $d_{n|n}$, $d_{n|n}^u$, $b_{n|n}$ deviennent les prochains états de défauts de capteurs précédents.

Ce procédé permet ainsi la localisation du dispositif de navigation DISP et donc la navigation du porteur de ce dispositif.

Il est possible qu'un nombre quelconque de variables d'erreur de défauts de capteurs définies dans le repère de mesure soient estimées par le procédé de l'invention. En plus de traiter des groupes de trois variables concaténées dans un vecteur, le procédé peut aussi traiter des groupes de neuf variables représentant une matrice de dimensions $3 \times 3$ notée $M$ mais concaténées dans un vecteur $\mu$ de taille 9 pour les besoins du filtrage de Kalman. Ce vecteur s'écrit à l'aide des coordonnées de M sous la forme :

$$\mu = \left( M_{1,1}, M_{2,1}, M_{3,1}, M_{1,2}, M_{2,2}, M_{3,2}, M_{1,3}, M_{2,3}, M_{3,3} \right)$$

Les variables d'erreurs invariantes définies jusqu'ici pour des vecteurs de taille 3 doivent alors être adaptées au vecteur $\mu$ de taille 9 en remplaçant la matrice $T$ de passage du repère mobile au repère auxiliaire par la matrice de passage du vecteur $\mu$ écrit en repère mobile au vecteur $\mu$ écrit en repère auxiliaire. Cette formule se déduit de la formule de changement de repère $M^a = TM^mT^T$ de la matrice M qui se traduit sur le vecteur $\mu$ par la formule $\mu^a = (T \otimes T)\mu^m$ où $\otimes$ désigne le produit de Kronecker (la matrice $T \otimes T$ est donc de taille $9 \times 9$) et où les exposants $a$ et $m$ désignent les grandeurs écrites respectivement en repère auxiliaire ou en repère mobile attaché au porteur. On déduit de cette équation une adaptation de la variable d'erreur invariante à gauche dans le repère auxiliaire, qu'on utilise dans la première étape de changement de variable d'erreur de l'invention et dans la deuxième étape de changement de variable d'erreur de l'invention :

$$e^{\mu} = \left( \hat{T} \otimes \hat{T} \right)^T (\mu^a - \hat{\mu}^a) = \left( \hat{T} \otimes \hat{T} \right)^T (T \otimes T)\mu^m - \hat{\mu}^m$$

On en déduit aussi une adaptation de la variable d'erreur invariante à droite dans le repère auxiliaire, qu'on peut aussi utiliser dans la première et dans la deuxième étape de changement de variable d'erreur de l'invention:

$$e^{\mu} = \mu^a - (T \otimes T)\left( \hat{T} \otimes \hat{T} \right)^T \hat{\mu}^a = (T \otimes T)(\mu^m - \hat{\mu}^m)$$

Dans la mise en œuvre décrite plus haut si un tel vecteur $\mu$ est ajouté à la suite des autres grandeurs estimées on déduit de ces variables d'erreur adaptées une adaptation à apporter à la matrice $L_n^{tot}$ qui devient une matrice $L_n^{tot\prime}$ définie à partir de $L_n^{tot}$ par l'ajout d'un bloc de taille $9 \times 9$ supplémentaire associé au vecteur $\mu$ :

$$L_n^{tot\prime} = \begin{pmatrix} L_n^{tot} & 0_{18,9} \\ 0_{9,18} & R(ds_{1:3})^T \otimes R(ds_{1:3})^T \end{pmatrix}$$

Il est aussi possible que des paramètres (contenus dans un vecteur $C^r$) décrivant l'environnement du véhicule dans le repère de référence soient estimés en même temps que les autres variables. Si ces paramètres sont groupés en vecteurs de taille 3 on peut leur associer des variables d'erreur invariantes et suivre les étapes de l'invention, mais ces paramètres peuvent être plus compliqués et décrire par exemple un champ magnétique ou un champ de vecteurs de vitesse du vent ou du courant couvrant tout l'espace. L'invention s'applique toujours, mais la rotation $T$ de changement de repère apparaissant dans les erreurs invariantes et passant des coordonnées en repère mobile attaché au porteur aux coordonnées en repère auxiliaire doit être remplacée par une opération de changement de repère $\phi_{T,V,X}$ passant les paramètres $C^m$ de l'environnement dans un repère mobile attaché au porteur aux paramètres $C^a$ de l'environnement dans un repère auxiliaire. On en déduit une adaptation de la variable d'erreur invariante à gauche dans le repère auxiliaire, qu'on utilise dans la première étape de changement de variable d'erreur de l'invention et dans la deuxième étape de changement de variable d'erreur de l'invention :

$$e^C = \phi_{\hat{T},\hat{V},\hat{X}}^{-1} \left( C^a - \hat{C}^a \right)$$

Où l'exposant -1 désigne la transformation réciproque. On en déduit aussi une adaptation de la variable d'erreur invariante à droite dans le repère auxiliaire, qu'on peut aussi utiliser dans la première et dans la deuxième étape de changement de variable d'erreur de l'invention:

$$e^C = C^a - \phi_{T,V,X} \circ \phi_{\hat{T},\hat{V},\hat{X}}^{-1} \hat{C}^a$$

Où l'exposant -1 désigne la transformation réciproque et le symbole ∘ désigne la composition de deux transformations.

Par exemple, l'environnement peut être un champ magnétique $B$ défini en tout point $P^a$ du repère auxiliaire par une formule de la forme $B^a(P^a) = C_0^a + C_1^a P^a$ : les paramètres décrivant cet environnement sont alors le vecteur $C_0^a$ de taille 3 et la matrice $C_1$ de taille $3 \times 3$. Le même champ s'écrit dans le repère mobile attaché au porteur par la formule $B^m(P^m) = C_0^m + C_1^m P^m$ avec $C_0^a = TC_0^m - TC_1^m T^T X^a$ et $C_1^a = TC_1^m T^T$ ·et $C_1^a = TC_1^m T^T$. La transformation de changement de repère des coordonnées du champ est alors :

$$\phi_{T,V,X}(C_0, C_1) = (TC_0 - TC_1 T^T X, TC_1 T^T)$$

Ce changement de variable permet d'obtenir les variables d'erreurs invariantes qui constituent le deuxième jeu de variables d'erreurs et donc de mettre en œuvre l'invention. En particulier, si on souhaite compléter la mise en œuvre déjà décrite par l'estimation des paramètres $C^r$ d'un champ magnétique écrits dans le repère de référence confondu ici avec le repère auxiliaire en utilisant la variable d'erreur $C^r$ - $\hat{C}^r$ dans le premier jeu de variables d'erreur et la variable d'erreur invariante $e_C = C^r - \phi_{T,V,X} \circ \phi_{\hat{T},\hat{V},\hat{X}}^{-1} \hat{C}^r$ dans le deuxième jeu de variables d'erreur l'adaptation des étapes de propagation et de mise à jour est classique mais la matrice $L_n^{tot}$ de l'invention est augmentée en une matrice $L_n^{tot'}$ :

$$L_n^{tot'} = \begin{pmatrix} L_n^{tot} & 0_{18,c} \\ \left[ D\phi_{\hat{C}_{n|n}^r} - D\phi_{\hat{C}_{n|n-1}^r} \right] Ad_{n|n-1} & 0_{c,9} & I_{c,c} \end{pmatrix}$$

Où $c$ est la dimension du vecteur $C^r$ des paramètres du champ magnétique et $D\phi_C$, est une matrice de taille $9 \times c$ définie par le développement de Taylor suivant :

$$\phi_{R(\xi),dv,dx}(C) = D\phi_C \begin{pmatrix} \xi \\ dv \\ dx \end{pmatrix} + \circ \begin{pmatrix} \xi \\ dv \\ dx \end{pmatrix}$$

Et $Ad_{n|n}$ et $Ad_{n|n-1}$ sont définies par les formule :

$$Ad_{n|n} = \begin{pmatrix} T_{n|n} & 0_{3,3} & 0_{3,3} \\ (\hat{V}_{n|n})_\times T_{n|n} & T_{n|n} & 0_{3,3} \\ (\hat{X}_{n|n})_\times T_{n|n} & 0_{3,3} & T_{n|n} \end{pmatrix}, Ad_{n|n-1} = \begin{pmatrix} T_{n|n-1} & 0_{3,3} & 0_{3,3} \\ (\hat{V}_{n|n-1})_\times T_{n|n-1} & T_{n|n-1} & 0_{3,3} \\ (\hat{X}_{n|n-1})_\times T_{n|n-1} & 0_{3,3} & T_{n|n-1} \end{pmatrix}$$

L'environnement décrit par les paramètres de $C$ est ici un champ magnétique mais peut être par exemple une fonction binaire prenant la valeur 1 pour les endroits occupés par un objet et 0 pour les endroits vides, ou prenant une valeur liée à une couleur observée à l'endroit considéré.

Lorsque les défauts d'un groupe de capteurs sont définis comme les produits scalaires de vecteurs bidimensionnels à estimer et de vecteurs connus et potentiellement variables au cours du temps, le premier changement de variable d'erreur peut être précédé par l'application d'une rotation du plan d'un angle différent pour chaque capteur du groupe et le second changement de variable peut être suivi par une rotation inverse. L'angle de cette rotation est l'angle moyen entre le vecteur connu associé à ce capteur et le vecteur associé à l'un des capteurs du groupe choisi comme référence angulaire.

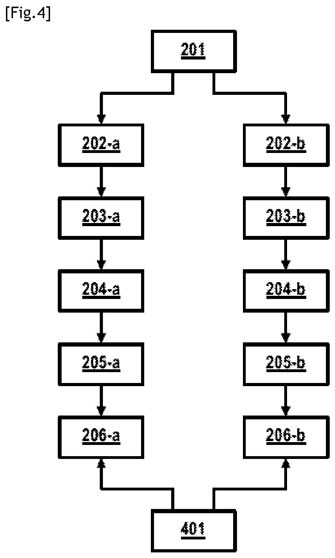

La figure 3 représente un autre de mode de réalisation du procédé de détermination de valeurs respectives de variables cinématiques du dispositif de navigation DISP et de variables de défauts de capteurs. Dans ce mode de réalisation, les étapes 202 à 206 sont doublées en deux branches et réalisées en parallèle. Ensuite, à différents instants, les estimations de deux branches sont fusionnées dans une étape de fusion 401 (représentée sur la figure 4). La figure 4 représente, d'une autre manière, ce mode de réalisation. On extrait, à chaque instant, les estimations des deux branches que l'on combine pour fournir une estimation consolidée mais cette estimation ne retournera jamais dans les branches. Elle est seulement fournie comme sortie. Ainsi, les branches restent indépendantes du début à la fin.

Telles que représentées sur la figure 4, les étapes 202-a à 206-a forment les étapes de la première branche. Les étapes 202-b à 206-b sont les étapes de la deuxième branche.

Pour être plus précis la figure 3 est un cas particulier du procédé représenté sur la figure 4.

Dans ce mode de réalisation le procédé d'aide à la navigation d'un véhicule comprenant les étapes suivantes :

- détermination 202-a de premières valeurs courantes des variables et d'une première matrice d'incertitude courante représentative d'une incertitude des premières valeurs courantes, à partir de premières valeurs précédentes des variables et d'une première matrice d'incertitude précédente,
- détermination 203-a d'une première correction à partir :

  - des premières valeurs courantes des variables,
  - de la première matrice d'incertitude courante et
  - d'une première mesure,
- mise à jour 204-a des premières valeurs courantes et de la première matrice d'incertitude courante à partir de la première correction et de la première matrice d'incertitude courante,
- première transformation 205-a de la première matrice d'incertitude courante afin d'obtenir une première matrice d'incertitude modifiée, cette première transformation 205-a est un premier changement de variable selon un premier point de linéarisation, et
- deuxième transformation 206-a de la première matrice d'incertitude modifiée, la deuxième transformation 206-a est un premier changement de variable d'erreur selon un deuxième point de linéarisation,

le premier point de linéarisation étant différent du deuxième point de linéarisation.

Le procédé comprend en outre :

- une détermination 202-b de deuxièmes valeurs courantes respectives des variables d'un dispositif de navigation DISP et d'une deuxième matrice d'incertitude courante représentative d'une incertitude des deuxièmes valeurs courantes respectives des variables, à partir de deuxièmes valeurs précédentes respectives des variables et d'une deuxième matrice d'incertitude précédente représentative d'une incertitude des deuxièmes valeurs précédentes respectives des variables,
- une détermination 203-b d'une deuxième correction à partir :

  - des deuxièmes valeurs courantes respectives des variables,
  - de la deuxième matrice d'incertitude courante et
  - d'une deuxième mesure qui est éventuellement identique à la première mesure,

- une mise à jour 204-b des deuxièmes valeurs courantes respectives des variables et de la deuxième matrice d'incertitude courante à partir de la deuxième correction et de la deuxième matrice d'incertitude courante,
- une première transformation 205-b de la deuxième matrice d'incertitude afin d'obtenir une deuxième matrice d'incertitude modifiée, la première transformation 205-b étant un premier changement de variable d'erreur selon un troisième point de linéarisation,
- une deuxième transformation 206-b de la deuxième matrice d'incertitude modifiée, la deuxième transformation 206-b est un changement de variable d'erreur selon un quatrième point de linéarisation,

le troisième point de linéarisation étant différent du quatrième point de linéarisation.

L'étape de fusion 401 permet alors d'obtenir avantageusement une estimation unique de l'état du système. Il est aussi possible d'avoir N branches différentes identifiés par un entier $i$. Dans ce cas, chaque branche $i$ est accompagnée d'un indicateur d'écart aux mesures $s_n^i$ (où $n$ désigne un pas de temps). Cet indicateur d'écart aux mesures est utilisé par l'étape de fusion 401.

Cet indicateur peut, par exemple, être initialisé à zéro et mis à jour de la façon suivante à chaque instant $n$ :

$$s_n^i = s_{n-1}^i + \left(z_n^i\right)^T (S_n)^{-1} z_n^i$$

Où $z_n^i$ est le vecteur dit « d'innovation » apparaissant dans les équations de la branche *i* et $S_n^i = H_n^i P_{n|n-1}^i \left(H_n^i\right)^T + R_n^i$ est la matrice appelée « covariance de l'innovation » construite à partir des matrices $H_n^i$, $P_{n|n-1}^i$, $R_n^i$ apparaissant également dans les équations de la branche *i*.

Dans un mode de réalisation, l'étape de fusion 401 permet de sélectionner la meilleure branche, qui sera la branche i associée à l'indicateur $s_n^i$ le plus faible.

Dans un mode de réalisation, l'étape de fusion 401 peut réaliser une moyenne pondérée des états retournés par les différentes branches i, les poids $p_n^i$ utilisés étant fonction des indicateurs d'écart aux mesures $s_n^i$. Ils pourront, par exemple, être calculés par la formule suivante :

$$p_n^i = \frac{\exp\left(-s_n^i\right)}{\sum_j \exp\left(-s_n^j\right)}$$

Ce mode de réalisation est particulièrement intéressant lorsque l'orientation initiale du porteur est inconnue. Dans ce cas chaque branche est mise en œuvre avec une initialisation différente.

L'étape 401 peut aussi mettre en œuvre un test statistique vérifiant la similitude ou consistance des deux estimateurs, pour obtenir un estimateur de meilleure intégrité qu'un filtre de Kalman classique. Le test de vraisemblance utilise la matrice $P'_{n|n}$ issue de la branche a et $P''_{n|n}$ issue de la branche b et vérifie les relations suivantes $p\left(\Delta s''\big|0, P''_{n|n}\right) > \alpha$ et $p\left(\Delta s'\big|0, P'_{n|n}\right) > \alpha$ où *Δs'* (resp. *Δs''*) est un vecteur représentatif de l'écart entre les deux états de navigation issus des branches a et b exprimé dans le même système de variables d'erreur que *P'* (resp. *P''*), *p(s|0, P)* est la densité de la loi normale multivariée centrée de matrice de covariance *P*, évaluée au point *s*, et $\alpha$ est un seuil préalablement fixé. L'écart *Δs* peut être, par exemple, l'erreur logarithmique caractéristique du filtrage invariant. On peut résumer ce test en disant qu'il vérifie que chaque estimation accorde une forte probabilité à l'autre estimation.

Un autre test possible consiste à calculer un écart entre les deux lois normales retournées par les deux filtres, cet écart étant par exemple la divergence de Kullback-Leibler définie par la formule :

$$\frac{1}{2}\left(tr\left(P'^{-1}\tilde{P}''\right) + \Delta s'^T P'^{-1}\Delta s' - k - \ln\left(\frac{\det(P')}{\det\left(\tilde{P}''\right)}\right)\right)$$

Où *tr()* est la fonction trace, *k* est la dimension de l'état du système (k=18 si les orientations, vitesses et positions sont estimées ainsi que les deux types de biais des gyroscopes et les biais des accéléromètres), ln() désigne la fonction logarithme, det() la fonction déterminant, $\tilde{P}''$ est la matrice *P''* écrite dans le même système de coordonnées que *P'* (les deux filtres de Kalman des branches a et b peuvent représenter leurs erreurs dans des systèmes de variables d'erreurs différents). Alternativement, on peut permuter les rôles de *P'* et *P''* :

$$\frac{1}{2}\left(tr\left(P''^{-1}\tilde{P}'\right) + \Delta s''^T P''^{-1}\Delta s'' - k - \ln\left(\frac{\det(P'')}{\det\left(\tilde{P}'\right)}\right)\right)$$

Le test sera positif si l'écart ainsi défini reste inférieur à un seuil préalablement fixé.

Si le test est positif, on retourne l'estimation de l'une des deux branches. On peut aussi retourner la moyenne des variables estimées par les deux branches. Une autre possibilité est de partir de l'état *s'* et de définir une correction *δs'* = *P'[P' + P̃'']⁻¹Δs'* qui sera apportée à s' par les mêmes formules que la correction ds' de l'étape de mise à jour.

Symétriquement, on peut partir de l'état *ds''* et définir une correction *δs''* = *P''[P'' + P̃']⁻¹Δs''* qui sera apportée à s'' par les mêmes formules que la correction ds'' de l'étape de mise à jour.

Ce mode de réalisation est particulièrement intéressant si des mesures auxiliaires sont effectuées par différents capteurs dans différents repère (par exemple un récepteur GPS fournissant une mesure de position dans un repère terrestre et un odomètre fournissant une mesure de vitesse dans un repère mobile attaché au porteur). Dans ce cas chacune des deux branches n'utilisera les mesures provenant que d'un seul capteur et les systèmes de variables d'erreurs impliqués dans l'invention pourront être différents pour les différentes branches.

Dans des modes de réalisation alternatifs les points de linéarisation du filtre de Kalman étendu amélioré par l'invention peuvent être choisis à l'avance, issus d'un autre filtre, issus d'une estimation consolidée à partir de plusieurs filtres, obtenus en modifiant la valeur de l'état estimé (par exemple en corrigeant son altitude tout en conservant sa latitude, sa longitude et les autres variables estimées) ou construits d'une quelconque autre façon à partir des variables estimées par l'invention.

**Revendications**

1. Procédé d'aide à la navigation d'un véhicule comprenant les étapes suivantes :

   - acquisition (201) de valeurs a priori de variables d'un dispositif de navigation (DISP) du véhicule,
   - détermination (202) de valeurs courantes des variables et d'une matrice d'incertitude courante, à partir de valeurs précédentes des variables et d'une matrice d'incertitude précédente,
   - détermination (203) d'une correction à partir :

     - des valeurs courantes des variables,
     - de la matrice d'incertitude courante et
     - d'une mesure d'une variable,

   la correction étant destinée à corriger les valeurs courantes et la matrice d'incertitude courante,
   - mise à jour (204) des valeurs courantes et de la matrice d'incertitude courante à partir de la correction et de la matrice d'incertitude courante, le procédé étant **caractérisé en ce qu'**il comprend les étapes suivantes:

     - première transformation (205) de la matrice d'incertitude courante afin d'obtenir une matrice d'incertitude modifiée, la première transformation (205) étant un premier changement de variable d'erreur selon un premier point de linéarisation, le premier changement de variable d'erreur permettant de passer d'un premier système de variables d'erreur à un deuxième système de variables d'erreur, de sorte à transférer toutes les variables d'erreur dans un même repère, et
     - deuxième transformation (206) de la matrice d'incertitude modifiée, la deuxième transformation étant un deuxième changement de variable d'erreur selon un deuxième point de linéarisation, le deuxième changement de variable d'erreur permettant de passer du deuxième système de variables d'erreur au premier système de variables d'erreur, le premier point de linéarisation étant différent du deuxième point de linéarisation.

2. Procédé selon la revendication 1, dans lequel les valeurs courantes et précédentes des variables sont définies dans un repère de référence,

   le premier changement de variable d'erreur est un changement vers des variables d'erreurs invariantes dans un repère auxiliaire connu par rapport au repère de référence,
   le deuxième changement de variables d'erreur est un changement depuis des variables d'erreurs invariantes dans le repère auxiliaire connu par rapport au repère de référence.

3. Procédé selon l'une des revendications 1 à 2, dans lequel on détermine le premier point de linéarisation à partir des valeurs courantes, avant la mise à jour (204) et on détermine le deuxième point de linéarisation à partir des valeurs courantes, après la mise à jour (204).

4. Procédé selon l'une des revendications 1 à 2, dans lequel le premier point de linéarisation est un point de linéarisation système utilisé lors de l'étape de mise à jour et le deuxième point de linéarisation est un point de linéarisation système utilisé lors de l'étape de détermination (202) des valeurs courantes de l'instant suivant.

5. Procédé selon l'une des revendications 1 à 4 dans lequel on détermine un produit d'une première matrice de transformation réalisant la première transformation (205) et d'une deuxième matrice de transformation réalisant la deuxième transformation (206),
   et on réalise conjointement la première transformation (205) et la deuxième transformation (206) en utilisant le produit.

**6.** Procédé selon l'une des revendications 1 à 5, les variables comprenant :

- une orientation du dispositif de navigation (DISP),
- une vitesse du dispositif de navigation (DISP),
- une position du dispositif de navigation (DISP) et
- un défaut sur un capteur du dispositif de navigation (DISP), dont une valeur courante est un vecteur ou une matrice de défaut courant,

le premier changement de variable d'erreur est un changement des variables d'erreur :

- d'une valeur courante de l'orientation,
- d'une valeur courante de la vitesse,
- d'une valeur courante de la position et
- du vecteur ou de la matrice de défaut courant,

vers des variables d'erreurs invariantes, dans un repère auxiliaire connu par rapport à un repère de référence.

**7.** Procédé selon l'une des revendications 1 à 5, les variables comprenant :

- une orientation du dispositif de navigation (DISP), dont une valeur courante est une matrice d'orientation courante et dont une valeur précédente est une matrice d'orientation précédente,
- une vitesse du dispositif de navigation (DISP), dont une valeur courante est un vecteur vitesse courant et une valeur précédente est un vecteur vitesse précédent,
- une position du dispositif de navigation (DISP), dont une valeur courante est un vecteur position courant et une valeur précédente est un vecteur position précédent et
- un défaut sur un capteur du dispositif de navigation (DISP), dont une valeur courante est un vecteur de défaut courant et une valeur précédente est un vecteur défaut précédent,
la matrice d'incertitude courante étant représentative d'une incertitude de la matrice d'orientation courante, du vecteur vitesse courant, du vecteur position courant et des variables de défauts de capteurs courants, et
la matrice d'incertitude précédente étant représentative d'une incertitude de la matrice d'orientation précédente, du vecteur vitesse précédent, du vecteur position précédent et des variables de défauts de capteurs précédents.

**8.** Procédé selon la revendication 7, les valeurs courantes étant associées à un instant courant et les valeurs précédentes étant associées un instant précédent, la détermination (202) des valeurs courantes comprenant :

- une détermination du vecteur vitesse courant par ajout au vecteur vitesse précédent d'une intégration, sur un intervalle temporel compris entre l'instant précédent et l'instant courant, d'une somme d'une force spécifique du dispositif de navigation (DISP) éventuellement corrigée à l'aide des valeurs estimées des défauts de capteurs, et d'un modèle d'une gravité terrestre subie par le dispositif de navigation (DISP),
- une détermination du vecteur de position courant par ajout au vecteur de position précédent d'une intégration, sur l'intervalle temporel, du vecteur vitesse précédent,
- une détermination de la matrice d'orientation courante par multiplication de la matrice d'orientation précédente avec une matrice représentative d'une rotation du dispositif de navigation (DISP) éventuellement corrigée à l'aide des valeurs estimées des défauts de capteurs, et/ou
- une détermination de la matrice d'incertitude courante à partir de la matrice d'incertitude précédente.

**9.** Procédé selon la revendication 7 ou 8, la mesure étant une mesure de la vitesse du dispositif de navigation (DISP), la détermination (203) de la correction comprenant :

- une soustraction à la mesure de la vitesse d'une multiplication de la transposée de la matrice d'orientation courante et du vecteur vitesse courant, et
- une multiplication de la soustraction par une matrice de gain.

**10.** Procédé selon l'une des revendications 7 à 9, la correction étant un vecteur de correction, la mise à jour (204) comprenant :

- une sous-étape de mise à jour de la matrice d'orientation courante par multiplication de la matrice d'orientation courante et d'une matrice de rotation associée à un vecteur de rotation qui constitue une première partie du vecteur de correction,

- une sous-étape de mise à jour du vecteur de vitesse courant par ajout au vecteur de vitesse courant d'une multiplication de la matrice de d'orientation courante et d'une deuxième partie du vecteur de correction,

- une sous-étape de mise à jour du vecteur de position courant par ajout au vecteur de position courant d'une multiplication de la matrice d'orientation et d'une troisième partie du vecteur de correction, et/ou

- une sous-étape de mise à jour de vecteurs de défauts de capteurs courants par ajout d'une quatrième partie du vecteur de correction.

11. Procédé selon l'une des revendications 7 à 10,

les valeurs courantes étant des premières valeurs courantes,
les valeurs précédentes étant des premières valeurs précédentes,
la correction étant une première correction,
la mesure étant une première mesure,
la matrice de gain étant une première matrice de gain,
la matrice d'incertitude étant une première matrice d'incertitude,
la matrice d'incertitude modifiée étant une première matrice d'incertitude modifiée,
le procédé comprenant en outre:

- une détermination (202-b) de deuxièmes valeurs courantes des variables et d'une deuxième matrice d'incertitude courante représentative d'une incertitude des deuxièmes valeurs courantes, à partir de deuxièmes valeurs précédentes des variables cinématiques et d'une deuxième matrice d'incertitude précédente représentative d'une incertitude des deuxièmes valeurs précédentes,

- une détermination (203-b) d'une deuxième correction à partir :

- des deuxièmes valeurs courantes,
- de la deuxième matrice d'incertitude courante et
- d'une deuxième mesure,

- une mise à jour (204-b) des deuxièmes valeurs courantes et de la deuxième matrice d'incertitude courante à partir de la deuxième correction et de la deuxième matrice d'incertitude courante,

- une première transformation (205-b) de la deuxième matrice d'incertitude afin d'obtenir une deuxième matrice d'incertitude modifiée, la première transformation (205-b) étant un premier changement de variable d'erreur selon un troisième point de linéarisation,

- une deuxième transformation (206-b) de la deuxième matrice d'incertitude modifiée, la deuxième transformation étant un deuxième changement de variable d'erreur selon un quatrième point de linéarisation, le troisième point de linéarisation étant différent du quatrième point de linéarisation.

12. Procédé selon la revendication 11, comprenant en outre une détermination (401) de valeurs consolidées des variables cinématiques, à partir des premières valeurs courantes et des deuxièmes valeurs courantes.

13. Procédé selon la revendication 12, la détermination (401) de valeurs consolidées respectives des variables cinématiques comprenant une détermination d'une similitude ou d'un écart entre les premières valeurs corrigées et les deuxièmes valeurs corrigées et, lorsque la similitude est supérieure à un seuil de similitude ou lorsque l'écart est inférieur à un seuil d'écart, la détermination (401) de valeurs consolidées respectives des variables cinématiques comprenant également :

- un moyennage des premières valeurs corrigées et des deuxièmes valeurs corrigées ou
- un moyennage pondéré des premières valeurs corrigées et des deuxièmes valeurs corrigées ou
- une sélection des premières valeurs corrigées ou des deuxièmes valeurs corrigées.

14. Procédé selon la revendication 12, la détermination (401) de valeurs consolidées respectives des variables cinématiques comprenant :

- une détermination d'un premier écart entre les premières valeurs corrigées et les premières mesures,
- une détermination d'un deuxième écart entre les deuxièmes valeurs corrigées et les deuxièmes mesures et
- une sélection des premières valeurs corrigées lorsque le premier écart est inférieur au deuxième écart ou des deuxièmes valeurs corrigées lorsque le premier écart est supérieur au deuxième écart.

**15.** Procédé selon l'une des revendications 1 à 14, dans lequel on détermine une valeur courante d'une variable représentant l'environnement du dispositif de navigation (DISP) à partir d'une valeur précédente de la variable représentant l'environnement du dispositif de navigation (DISP).

**16.** Dispositif de navigation (DISP) comprenant :

- une unité de traitement (UNIT),
- trois accéléromètres (101-a à 101-c),
- trois gyroscopes (102-a à 102-c) et
- un dispositif de mesure (103-a) par exemple d'une vitesse du dispositif de navigation (DISP),

l'unité de traitement (UNIT) étant configurée pour la mise en œuvre du procédé d'aide à la navigation selon l'une des revendications 1 à 15.

**17.** Produit programme d'ordinateur comprenant des instructions de code de programme pour l'exécution des étapes du procédé d'aide à la navigation, selon l'une des revendications 1 à 15, lorsque celui-ci est exécuté par un processeur.

**Patentansprüche**

**1.** Verfahren zur Unterstützung der Navigation eines Fahrzeugs, das die folgenden Schritte umfasst:

- Erfassen (201) von A-priori-Werten von Variablen einer Navigationsvorrichtung (DISP) des Fahrzeugs,
- Bestimmen (202) von aktuellen Werten der Variablen und einer aktuellen Unsicherheitsmatrix aus vorherigen Werten der Variablen und einer vorherigen Unsicherheitsmatrix,
- Bestimmen (203) einer Korrektur anhand:

  - der aktuellen Werte der Variablen,
  - der aktuellen Unsicherheitsmatrix und
  - einer Messung einer Variablen,

wobei die Korrektur dazu bestimmt ist, die aktuellen Werte und die aktuelle Unsicherheitsmatrix zu korrigieren,
- Aktualisieren (204) der aktuellen Werte und der aktuellen Unsicherheitsmatrix anhand der Korrektur und der aktuellen Unsicherheitsmatrix, wobei das Verfahren **dadurch gekennzeichnet ist, dass** es die folgenden Schritte umfasst:

  - erste Transformation (205) der aktuellen Unsicherheitsmatrix, um eine geänderte Unsicherheitsmatrix zu erhalten, wobei die erste Transformation (205) eine erste Fehlervariablenänderung gemäß einem ersten Linearisierungspunkt ist, wobei die erste Fehlervariablenänderung gestattet, von einem ersten Fehlervariablensystem in ein zweites Fehlervariablensystem derart zu wechseln, dass alle Fehlervariablen in dasselbe Bezugssystem übertragen werden, und
  - zweite Transformation (206) der geänderten Unsicherheitsmatrix, wobei die zweite Transformation eine zweite Fehlervariablenänderung gemäß einem zweiten Linearisierungspunkt ist, wobei die zweite Fehlervariablenänderung gestattet, von einem zweiten Fehlervariablensystem in das erste Fehlervariablensystem zu wechseln, wobei der erste Linearisierungspunkt vom zweiten Linearisierungspunkt verschieden ist.

**2.** Verfahren nach Anspruch 1, wobei die aktuellen und vorherigen Werte der Variablen in einem Referenzbezugssystem definiert sind,

die erste Fehlervariablenänderung eine Änderung zu invarianten Fehlervariablen in einem Hilfsbezugssystem ist, das in Bezug auf das Referenzbezugssystem bekannt ist,
die zweite Fehlervariablenänderung eine Änderung von invarianten Fehlervariablen im Hilfsbezugssystem ist, das in Bezug auf das Referenzbezugssystem bekannt ist.

**3.** Verfahren nach einem der Ansprüche 1 bis 2, wobei der erste Linearisierungspunkt anhand der aktuellen Werte vor der Aktualisierung (204) bestimmt wird und der zweite Linearisierungspunkt anhand der aktuellen Werte nach der Aktualisierung (204) bestimmt wird.

4.  Verfahren nach einem der Ansprüche 1 bis 2, wobei der erste Linearisierungspunkt ein Systemlinearisierungspunkt ist, der beim Aktualisierungsschritt verwendet wird, und der zweite Linearisierungspunkt ein Systemlinearisierungspunkt ist, der beim Bestimmungsschritt (202) der aktuellen Werte des nächsten Zeitpunkts verwendet wird.

5.  Verfahren nach einem der Ansprüche 1 bis 4, wobei ein Produkt einer ersten Transformationsmatrix, die die erste Transformation (205) durchführt, und einer zweiten Transformationsmatrix, die die zweite Transformation (206) durchführt, bestimmt wird
und die erste Transformation (205) und die zweite Transformation (206) unter Verwendung des Produkts gemeinsam durchgeführt werden.

6.  Verfahren nach einem der Ansprüche 1 bis 5, wobei die Variablen umfassen:

    - eine Ausrichtung der Navigationsvorrichtung (DISP),
    - eine Geschwindigkeit der Navigationsvorrichtung (DISP),
    - eine Position der Navigationsvorrichtung (DISP) und
    - einen Fehler an einem Sensor der Navigationsvorrichtung (DISP), dessen aktueller Wert ein Vektor oder eine Matrix eines aktuellen Fehlers ist,
    wobei die erste Fehlervariablenänderung eine Änderung der Fehlervariablen ist:

      - eines aktuellen Werts der Ausrichtung,
      - eines aktuellen Werts der Geschwindigkeit,
      - eines aktuellen Werts der Position und
      - des Vektors oder der Matrix eines aktuellen Fehlers

    zu invarianten Fehlervariablen in einem Hilfsbezugssystem, das in Bezug auf ein Referenzbezugssystem bekannt ist.

7.  Verfahren nach einem der Ansprüche 1 bis 5, wobei die Variablen umfassen:

    - eine Ausrichtung der Navigationsvorrichtung (DISP), von der ein aktueller Wert eine aktuelle Ausrichtungsmatrix ist und von der ein vorheriger Wert eine vorherige Ausrichtungsmatrix ist,
    - eine Geschwindigkeit der Navigationsvorrichtung (DISP), von der ein aktueller Wert ein aktueller Geschwindigkeitsvektor und ein vorheriger Wert ein vorheriger Geschwindigkeitsvektor ist,
    - eine Position der Navigationsvorrichtung (DISP), von der ein aktueller Wert ein aktueller Positionsvektor und ein vorheriger Wert ein vorheriger Positionsvektor ist, und
    - einen Fehler an einem Sensor der Navigationsvorrichtung (DISP), von dem ein aktueller Wert ein Vektor eines aktuellen Fehlers ist und ein vorheriger Wert ein Vektor eines vorherigen Fehlers ist,
    wobei die aktuelle Unsicherheitsmatrix für eine Unsicherheit der aktuellen Ausrichtungsmatrix, des aktuellen Geschwindigkeitsvektors, des aktuellen Positionsvektors und der Variablen der aktuellen Sensorfehler repräsentativ ist, und
    wobei die vorherige Unsicherheitsmatrix für eine Unsicherheit der vorherigen Ausrichtungsmatrix, des vorherigen Geschwindigkeitsvektors, des vorherigen Positionsvektors und der Variablen der vorherigen Sensorfehler repräsentativ ist.

8.  Verfahren nach Anspruch 7, wobei die aktuellen Werte einem aktuellen Zeitpunkt zugeordnet sind und die vorherigen Werte einem vorherigen Zeitpunkt zugeordnet sind, wobei die Bestimmung (202) der aktuellen Werte umfasst:

    - eine Bestimmung des aktuellen Geschwindigkeitsvektors durch Hinzufügen zum vorherigen Geschwindigkeitsvektor einer Integration über ein Zeitintervall, das zwischen dem vorherigen Zeitpunkt und dem aktuellen Zeitpunkt liegt, einer Summe einer spezifischen Kraft der Navigationsvorrichtung (DISP), die gegebenenfalls mit Hilfe der geschätzten Werte der Sensorfehler korrigiert wird, und eines Modells einer von der Navigationsvorrichtung (DISP) erfahrenen Erdanziehungskraft,
    - eine Bestimmung des aktuellen Positionsvektors durch Hinzufügen zum vorherigen Positionsvektor einer Integration, über das Zeitintervall, des vorherigen Geschwindigkeitsvektors,
    - eine Bestimmung der aktuellen Ausrichtungsmatrix durch Multiplikation der vorherigen Ausrichtungsmatrix mit einer Matrix, die für eine Rotation der Navigationsvorrichtung (DISP) repräsentativ ist, gegebenenfalls korrigiert mit Hilfe der geschätzten Werte der Sensorfehler, und/oder
    - eine Bestimmung der aktuellen Unsicherheitsmatrix anhand der vorherigen Unsicherheitsmatrix.

9. Verfahren nach Anspruch 7 oder 8, wobei die Messung eine Messung der Geschwindigkeit der Navigationsvorrichtung (DISP) ist und die Bestimmung (203) der Korrektur umfasst:

- eine Subtraktion einer Multiplikation der Transponierten der aktuellen Ausrichtungsmatrix und des aktuellen Geschwindigkeitsvektors von der Geschwindigkeitsmessung und
- eine Multiplikation der Subtraktion mit einer Verstärkungsmatrix.

10. Verfahren nach einem der Ansprüche 7 bis 9, wobei die Korrektur ein Korrekturvektor ist, wobei die Aktualisierung (204) umfasst:

- einen Aktualisierungsteilschritt der aktuellen Ausrichtungsmatrix durch Multiplikation der aktuellen Ausrichtungsmatrix und einer Rotationsmatrix, die einem Rotationsvektor zugeordnet ist, der einen ersten Teil des Korrekturvektors bildet,
- einen Aktualisierungsteilschritt des aktuellen Geschwindigkeitsvektors durch Hinzufügen einer Multiplikation der aktuellen Ausrichtungsmatrix und eines zweiten Teils des Korrekturvektors zum aktuellen Geschwindigkeitsvektor,
- einen Aktualisierungsteilschritt des aktuellen Positionsvektors durch Hinzufügen einer Multiplikation der Ausrichtungsmatrix und eines dritten Teils des Korrekturvektors zum aktuellen Positionsvektor, und/oder
- einen Aktualisierungsteilschritt aktueller Sensorfehlervektoren durch Hinzufügen eines vierten Teils des Korrekturvektors.

11. Verfahren nach einem der Ansprüche 7 bis 10,

wobei die aktuellen Werte erste aktuelle Werte sind,
wobei die vorherigen Werte erste vorherige Werte sind,
wobei die Korrektur eine erste Korrektur ist,
wobei die Messung eine erste Messung ist,
wobei die Verstärkungsmatrix eine erste Verstärkungsmatrix ist,
wobei die Unsicherheitsmatrix eine erste Unsicherheitsmatrix ist,
wobei die geänderte Unsicherheitsmatrix eine erste geänderte Unsicherheitsmatrix ist,
wobei das Verfahren ferner umfasst:

- eine Bestimmung (202-b) von zweiten aktuellen Werten der Variablen und einer zweiten aktuellen Unsicherheitsmatrix, die für eine Unsicherheit der zweiten aktuellen Werte repräsentativ ist, anhand zweiter vorheriger Werte der kinematischen Variablen und einer zweiten vorherigen Unsicherheitsmatrix, die für eine Unsicherheit der zweiten vorherigen Werte repräsentativ ist,
- eine Bestimmung (203-b) einer zweiten Korrektur anhand:

- der aktuellen zweiten Werte,
- der zweiten aktuellen Unsicherheitsmatrix und
- einer zweiten Messung,

- eine Aktualisierung (204-b) der zweiten aktuellen Werte und der zweiten aktuellen Unsicherheitsmatrix anhand der zweiten Korrektur und der zweiten aktuellen Unsicherheitsmatrix,
- eine erste Transformation (205-b) der zweiten Unsicherheitsmatrix, um eine zweite geänderte Unsicherheitsmatrix zu erhalten, wobei die erste Transformation (205-b) eine erste Fehlervariablenänderung gemäß einem dritten Linearisierungspunkt ist,
- eine zweite Transformation (206-b) der zweiten geänderten Unsicherheitsmatrix, wobei die zweite Transformation eine zweite Fehlervariablenänderung gemäß einem vierten Linearisierungspunkt ist, wobei der dritte Linearisierungspunkt vom vierten Linearisierungspunkt verschieden ist.

12. Verfahren nach Anspruch 11, das ferner eine Bestimmung (401) von konsolidierten Werten der kinematischen Variablen anhand der ersten aktuellen Werte und der zweiten aktuellen Werte umfasst.

13. Verfahren nach Anspruch 12, wobei die Bestimmung (401) jeweiliger konsolidierter Werte der kinematischen Variablen eine Bestimmung einer Ähnlichkeit oder einer Abweichung zwischen den ersten korrigierten Werten und den zweiten korrigierten Werten umfasst und, wenn die Ähnlichkeit größer als ein Ähnlichkeitsschwellenwert ist oder wenn die Abweichung kleiner als ein Abweichungsschwellenwert ist, die Bestimmung (401) jeweiliger konsolidierter Werte der kinematischen Variablen ebenfalls umfasst:

- die Bildung eines Mittelwerts der ersten korrigierten Werte und der zweiten korrigierten Werte oder
- die Bildung eines gewichteten Mittelwerts der ersten korrigierten Werte und der zweiten korrigierten Werte oder
- eine Auswahl der ersten korrigierten Werte oder der zweiten korrigierten Werte.

14. Verfahren nach Anspruch 12, wobei die Bestimmung (401) jeweiliger konsolidierter Werte der kinematischen Variablen umfasst:

- eine Bestimmung einer ersten Abweichung zwischen den ersten korrigierten Werten und den ersten Messungen,
- eine Bestimmung einer zweiten Abweichung zwischen den zweiten korrigierten Werten und den zweiten Messungen und
- eine Auswahl der ersten korrigierten Werte, wenn die erste Abweichung kleiner ist als die zweite Abweichung, oder der zweiten korrigierten Werte, wenn die erste Abweichung größer ist als die zweite Abweichung.

15. Verfahren nach einem der Ansprüche 1 bis 14, wobei ein aktueller Wert einer Variablen, die die Umgebung der Navigationsvorrichtung (DISP) darstellt, anhand eines vorherigen Werts der Variablen, die die Umgebung der Navigationsvorrichtung (DISP) darstellt, bestimmt wird.

16. Navigationsvorrichtung (DISP), umfassend:

- eine Verarbeitungseinheit (UNIT),
- drei Beschleunigungsmesser (101-a bis 101-c),
- drei Gyroskope (102-a bis 102-c) und
- eine Messvorrichtung (103-a) beispielsweise für eine Geschwindigkeit der Navigationsvorrichtung (DISP),

wobei die Verarbeitungseinheit (UNIT) zur Durchführung des Verfahrens zur Unterstützung der Navigation nach einem der Ansprüche 1 bis 15 ausgelegt ist.

17. Computerprogrammprodukt, das Programmcodeanweisungen zur Ausführung der Schritte des Verfahrens zur Unterstützung der Navigation nach einem der Ansprüche 1 bis 15 umfasst, wenn dieses von einem Prozessor ausgeführt wird.

## Claims

1. Method for assisting in the navigation of a vehicle, comprising the following steps:

- acquiring (201) a priori values of variables of a navigation device (DISP) of the vehicle,
- determining (202) current values of the variables and a current uncertainty matrix, based on previous values of the variables and a previous uncertainty matrix,
- determining (203) a correction based on:

- the current values of the variables,
- the current uncertainty matrix, and
- a measurement of a variable,

the correction being intended to correct the current values and the current uncertainty matrix,
- updating (204) the current values and the current uncertainty matrix based on the correction and the current uncertainty matrix, the method being **characterized in that** it comprises the following steps:

- first transformation (205) of the current uncertainty matrix in order to obtain a modified uncertainty matrix, the first transformation (205) being a first change of error variable according to a first linearisation point, the first error variable change allowing the transition from a first system of error variables to a second system of error variables, so as to transfer all the error variables to the same reference frame, and
- second transformation (206) of the modified uncertainty matrix, the second transformation being a second error variable change according to a second linearisation point, the second error variable change allowing transition from the second error variable system to the first error variable system, the first linearisation point being different from the second linearisation point.

2. Method according to claim 1, in which the current and previous values of the variables are defined in a reference frame,

   the first error variable change is a change to invariant error variables in an auxiliary reference frame known relative to the reference frame,
   the second change of error variables is a change from invariant error variables in the known auxiliary reference frame relative to the reference frame.

3. Method according to one of claims 1 to 2, in which the first linearisation point is determined from the current values before the update (204) and the second linearisation point is determined from the current values after the update (204).

4. Method according to one of claims 1 to 2, wherein the first linearisation point is a system linearisation point used during the update step and the second linearisation point is a system linearisation point used during the step of determining (202) the current values of the next instant.

5. Method according to one of claims 1 to 4, wherein a product of a first transformation matrix performing the first transformation (205) and a second transformation matrix performing the second transformation (206) is determined, and the first transformation (205) and the second transformation (206) are performed together using the product.

6. Method according to one of claims 1 to 5, the variables comprising:

   - an orientation of the navigation device (DISP),
   - a speed of the navigation device (DISP),
   - a position of the navigation device (DISP), and
   - a fault on a sensor of the navigation device (DISP), whose current value is a current fault vector or matrix,

   the first change in error variable is a change in the error variables:

   - a current value of the orientation,
   - a current value of the speed,
   - a current value of the position, and
   - the current fault vector or matrix,

   to invariant error variables, in an auxiliary coordinate system known relative to a reference coordinate system.

7. Method according to one of claims 1 to 5, the variables comprising:

   - an orientation of the navigation device (DISP), whose current value is a current orientation matrix and whose previous value is a previous orientation matrix,
   - a navigation device speed (DISP), whose current value is a current speed vector and whose previous value is a previous speed vector,
   - a position of the navigation device (DISP), whose current value is a current position vector and whose previous value is a previous position vector, and
   - a fault on a navigation device sensor (DISP), whose current value is a current fault vector and whose previous value is a previous fault vector,
   the current uncertainty matrix being representative of an uncertainty of the current orientation matrix, the current velocity vector, the current position vector and the current sensor fault variables, and
   the previous uncertainty matrix being representative of an uncertainty of the previous orientation matrix, the previous velocity vector, the previous position vector and the previous sensor fault variables.

8. The method according to claim 7, wherein the current values are associated with a current time and the previous values are associated with a previous time, the determination (202) of the current values comprising:

   - determination of the current velocity vector by adding to the previous velocity vector an integration, over a time interval between the previous instant and the current instant, of a sum of a specific force of the navigation device (DISP), possibly corrected using the estimated values of sensor faults, and a model of the Earth's gravity experienced by the navigation device (DISP),

- a determination of the current position vector by adding to the previous position vector an integration, over the time interval, of the previous velocity vector,
- a determination of the current orientation matrix by multiplying the previous orientation matrix by a matrix representing a rotation of the navigation device (DISP), possibly corrected using the estimated values of sensor faults, and/or
- determining the current uncertainty matrix from the previous uncertainty matrix.

9. Method according to claim 7 or 8, the measurement being a measurement of the speed of the navigation device (DISP), the determination (203) of the correction comprising:

- subtracting from the velocity measurement a multiplication of the transpose of the current orientation matrix and the current velocity vector, and
- multiplying the subtraction by a gain matrix.

10. A method according to any one of claims 7 to 9, wherein the correction is a correction vector, the updating (204) comprising:

- a sub-step of updating the current orientation matrix by multiplying the current orientation matrix by a rotation matrix associated with a rotation vector that constitutes a first part of the correction vector,
- a sub-step of updating the current velocity vector by adding to the current velocity vector a multiplication of the current orientation matrix and a second part of the correction vector,
- a sub-step of updating the current position vector by adding to the current position vector a multiplication of the orientation matrix and a third part of the correction vector, and/or
- a sub-step of updating current sensor fault vectors by adding a fourth part of the correction vector.

11. Method according to one of claims 7 to 10,

the current values being first current values,
the previous values being first previous values,
the correction being a first correction,
the measurement being a first measurement,
the gain matrix being a first gain matrix,
the uncertainty matrix being a first uncertainty matrix,
the modified uncertainty matrix being a first modified uncertainty matrix,
the method further comprising:

- determining (202-b) second current values of the variables and a second current uncertainty matrix representative of an uncertainty of the second current values, from previous second values of the kinematic variables and a previous second uncertainty matrix representative of an uncertainty of the previous second values,
- determining (203-b) a second correction based on:

- the current second values,
- the second current uncertainty matrix, and
- a second measurement,

- an update (204-b) of the second current values and the second current uncertainty matrix based on the second correction and the second current uncertainty matrix,
- a first transformation (205-b) of the second uncertainty matrix in order to obtain a modified second uncertainty matrix, the first transformation (205-b) being a first change of error variable according to a third linearisation point,
- a second transformation (206-b) of the second modified uncertainty matrix, the second transformation being a second change of error variable according to a fourth linearisation point,

the third linearisation point being different from the fourth linearisation point.

12. Method according to claim 11, further comprising determining (401) consolidated values of the kinematic variables from the first current values and the second current values.

13. Method according to claim 12, the determination (401) of respective consolidated values of the kinematic variables comprising a determination of a similarity or a deviation between the first corrected values and the second corrected values and, when the similarity is greater than a similarity threshold or when the deviation is less than a deviation threshold, the determination (401) of respective consolidated values of the kinematic variables also comprising:

   - averaging the first corrected values and the second corrected values, or
   - a weighted averaging of the first corrected values and the second corrected values, or
   - selecting the first corrected values or the second corrected values.

14. Method according to claim 12, the determination (401) of respective consolidated values of the kinematic variables comprising:

   - determining a first deviation between the first corrected values and the first measurements,
   - determination of a second deviation between the second corrected values and the second measurements, and
   - selecting the first corrected values when the first deviation is less than the second deviation, or the second corrected values when the first deviation is greater than the second deviation.

15. Method according to one of claims 1 to 14, in which a current value of a variable representing the environment of the navigation device (DISP) is determined from a previous value of the variable representing the environment of the navigation device (DISP).

16. Navigation device (DISP) comprising:

   - a processing unit (UNIT),
   - three accelerometers (101-a to 101-c),
   - three gyroscopes (102-a to 102-c) and
   - a measuring device (103-a), for example for measuring the speed of the navigation device (DISP),

   the processing unit (UNIT) being configured to implement the navigation assistance method according to one of claims 1 to 15.

17. Computer program product comprising program code instructions for executing the steps of the navigation assistance method according to one of claims 1 to 15 when executed by a processor.

[Fig.1]

DISP

| 101-a | 101-b | 101-c |
|-------|-------|-------|
| 102-a | 102-b | 102-c |
| 103   |       | 104   |

UNIT

EP 4 348 180 B1

[Fig.2]

```
┌─────────┐
│   201   │
└─────────┘
     │
     ▼
┌─────────┐
│   202   │
└─────────┘
     │
     ▼
┌─────────┐
│   203   │
└─────────┘
     │
     ▼
┌─────────┐
│   204   │
└─────────┘
     │
     ▼
┌─────────┐
│   205   │
└─────────┘
     │
     ▼
┌─────────┐
│   206   │
└─────────┘
```

[Fig.3]

```
Capteurs                              ⌒              GPS
inertiels

   │           │          │           │        │         │
   ▼           ▼          ▼           ▼        ▼         ▼
Riccati 1 → Estimation 1      Estimation 2 → Riccati 2

              │                  │
              ▼                  ▼
            Estimation
            consolidée
```

29

[Fig.4]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017314928 A1